# EUROPÄISCHE PATENTSCHRIFT

(11) **EP 3 807 031 B1**
(45) Veröffentlichungstag und Bekanntmachung des Hinweises auf die Patenterteilung: **20.08.2025**
(21) Anmeldenummer: 19769447.4
(22) Anmeldetag: 13.09.2019
(51) Int. Cl.: B22F 10/28, B22F 10/366, B33Y 10/00, B33Y 30/00, B29C 64/153, B29C 64/393, B33Y 50/02, B22F 10/80, B22F 10/85, G06F 113/10, G06F 119/18

(54) **BERECHNUNG VON BELICHTUNGSBAHNEN MIT GERINGEM BAUTEILVERZUG**
CALCULATING EXPOSURE PATHS HAVING LOW COMPONENT DISTORTION
CALCUL DE TRAJETS D'EXPOSITION À FAIBLE DISTORSION DES PIÈCES

(30) Priorität: 19.09.2018 DE 102018215983
(43) Veröffentlichungstag der Anmeldung: 21.04.2021
(73) Patentinhaber: EOS GmbH Electro Optical Systems, 82152 Krailling (DE)
(72) Erfinder: OREND, Jan, 82319 Starnberg (DE)
(74) Vertreter: Prüfer & Partner mbB Patentanwälte · Rechtsanwälte
(86) Internationale Anmeldenummer: PCT/EP2019/074480
(87) Internationale Veröffentlichungsnummer: WO 2020/058114

(56) Entgegenhaltungen:
- EP-A1- 3 170 648
- EP-A2- 0 429 196
- WO-A2-2016/079496
- THOMAS TÖPPEL ET AL: "EIGENSPANNUNGEN UND VERZUG BEI ADDITIVER FERTIGUNG FACHBEITRAG", SCHWEISSEN UND SCHNEIDEN BAND 68 HEFT 4, 1 January 2016 (2016-01-01), pages 176 - 186, XP055641178, Retrieved from the Internet <URL:https://www.simufact.de/files/Medien/_6NewsundEvents/Articles/deutsch/Simufact-A-Eigenspannungen-und-Verzug-bei-der-additiven-Fertigung.pdf> [retrieved on 20191111]

## Beschreibung

Die vorliegende Erfindung betrifft ein Verfahren zur computergestützten Bereitstellung von Steuerdaten für eine additive Herstellvorrichtung zur Herstellung eines dreidimensionalen Objekts durch schichtweises Aufbringen und selektives Verfestigen eines Aufbaumaterials. Weiterhin betrifft die Erfindung ein Verfahren und eine Vorrichtung zur computergestützten Ansteuerung einer Anzahl von Energieeintragseinrichtungen in einer additiven Herstellvorrichtung, sowie eine additive Herstellvorrichtung und ein additives Herstellverfahren zur Herstellung eines dreidimensionalen Objekts.

Additive Herstellvorrichtungen und Herstellverfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Der Energieeintrag durch den Laserstrahl führt dabei zu einem teilweisen oder vollständigen Aufschmelzen des Aufbaumaterials. Nach dem Abkühlen liegt das aufgeschmolzene Aufbaumaterial dann als Festkörper vor. Durch die hohen Temperaturunterschiede können sich dabei, insbesondere beim Abkühlen des auf- oder angeschmolzenen Aufbaumaterials, intrinsische mechanische Spannungen (Eigenspannungen) in dem Objekt ausbilden, beispielsweise wenn verschiedene Bereiche des Objekts unterschiedlich schnell abkühlen und sich so plastisch und/oder elastisch verformen. Dies führt einerseits zu einer Deformation des fertigen Objekts und beeinträchtigt damit die Qualität und Maßhaltigkeit des Objekts. Andererseits können Verformungen bereits fertiggestellter Objektbereiche während des Herstellungsprozesses zu Kollisionen mit einem Beschichter, der eine neue Aufbaumaterialschicht aufbringt, führen und somit den Schichtauftrag beeinflussen und/oder behindern.

Die Verformung (Deformation) des fertig hergestellten Objekts aufgrund thermisch bedingter Eigenspannungen wird auch als (Bauteil-)Verzug bezeichnet. Insbesondere wenn das Aufbaumaterial mit einem sich in jeder Schicht oder zumindest in einer Mehrzahl aufeinanderfolgender Schichten wiederholenden Belichtungsmuster verfestigt wird, z. B. wenn der Laserstrahl innerhalb des Objektquerschnitts auf zueinander parallelen Verfestigungsbahnen über die Aufbaumaterialschichten geführt wird, kann dies zu einem Temperaturgradienten führen. Daraus resultiert ein großer Verzug des fertigen Objekts bzw. ein Objekt mit großen Eigenspannungen.

Um einen Verzug des Objekts zu verringern, ist beispielsweise aus der WO 2008/116518 A1 bekannt, Schichten des Aufbaumaterials in einem Muster aus parallelen Verfestigungslinien zu belichten, wobei Verfestigungslinien in aufeinanderfolgenden Aufbaumaterialschichten zueinander um einen Winkel gedreht werden.

EP 3 170 648 A1 zeigt eine Belichtungsstrategie, bei der das Aufbaumaterial in zueinander parallelen Scanvektoren abgetastet wird, wobei der zu belichtende Bereich in Segmente aufgeteilt wird und die Scanvektoren senkrecht zu einer nach dem Aufbringen einer Bauteilschicht in dem jeweiligen Segment vorliegenden Hauptspannungsrichtung verlaufen.

Der Fachbeitrag von Thomas Töppel et al. "EIGENSPANNUNGEN UND VERZUG BEI ADDITIVER FERTIGUNG FACHBEITRAG", in Schweißen und Schneiden Band 68 Heft 4, 1. Januar 2016 (2016-01-01), Seiten 176-186, XP055641178, beschreibt Untersuchungen zu Einflussgrößen und Maßnahmen zur Reduzierung von Eigenspannungen und Verzug beim Laserstrahlschmelzen.

Es ist Aufgabe der vorliegenden Erfindung, ein alternatives bzw. verbessertes Verfahren und eine alternative bzw. verbesserte Vorrichtung zum additiven Herstellen eines dreidimensionalen Objekts durch schichtweises Aufbringen und selektives Verfestigen eines Aufbaumaterials bereitzustellen, mittels denen insbesondere die mechanischen Eigenschaften des herzustellenden Objekts verbessert werden können.

Die Aufgabe wird gelöst durch ein computergestütztes Verfahren zur Bereitstellung von Steuerdaten gemäß Anspruch 1, ein Verfahren zur computergestützten Ansteuerung einer Anzahl von Energieeintragseinrichtungen gemäß Anspruch 2, eine Vorrichtung zur computergestützten Ansteuerung einer Anzahl von Energieeintragseinrichtungen gemäß Anspruch 7, eine additive Herstellvorrichtung gemäß Anspruch 10, ein additives Herstellverfahren gemäß Anspruch 11, sowie ein Computerprogramm gemäß Anspruch 15. Weiterbildungen der Erfindung sind in den abhängigen Ansprüchen angegeben. Dabei können die Verfahren auch durch die untenstehenden bzw. in den Unteransprüchen angeführten Merkmale der Vorrichtungen weitergebildet sein oder umgekehrt. Auch können die Merkmale der Verfahren oder der Vorrichtungen jeweils untereinander zur Weiterbildung genutzt werden.

Ein erfindungsgemäßes computergestütztes Verfahren gemäß einem ersten Aspekt der Erfindung dient der Bereitstellung von Steuerdaten für eine additive Herstellvorrichtung zur Herstellung eines dreidimensionalen Objekts mittels derselben, wobei das Objekt hergestellt wird durch Aufbringen eines Aufbaumaterials, Schicht auf Schicht und Verfestigen des Aufbaumaterials mittels Zufuhr von Strahlungsenergie zu Stellen, vorzugsweise allen Stellen, in einer Schicht, die dem Querschnitt des Objekts in dieser Schicht zugeordnet sind, indem zumindest eine Energieeintragseinrichtung zum Eintragen von Energie in das Aufbaumaterial diese Stellen mit mindestens einem Energiestrahlbündel gemäß einem Satz von Energieeintragsparametern entlang einer Anzahl von Verfestigungsbahnen in einer Bauebene abtastet. Das Verfahren zur Bereitstellung von Steuerdaten weist auf: einen ersten Schritt des Zugriffs auf computerbasierte Modelldaten von zwei bei der Herstellung zeitlich aufeinanderfolgend, bevorzugt zeitlich unmittelbar aufeinanderfolgend, zu verfestigenden Querschnitten eines Objektabschnitts, einen zweiten Schritt des Erzeugens eines Datenmodells jedes der beiden Querschnitte, wobei in dem Datenmodell für jeden der beiden Querschnitte ein Abtasten der Aufbaumaterialschicht mit zumindest einem Energiestrahlbündel entlang zumindest einer Verfestigungsbahn spezifiziert ist, wobei spezifiziert wird, dass beim Abtasten der Stellen einer Aufbaumaterialschicht, die dem jeweiligen zu verfestigenden Querschnitt zugeordnet sind, der Auftreffbereich zumindest eines Energiestrahlbündels auf dem Aufbaumaterial entlang zumindest eines Abschnitts einer Verzugsfeldisolinie bewegt wird, wobei ein Abschnitt einer Verzugsfeldisolinie, entlang dessen der Auftreffbereich beim Abtasten des zeitlich später zu verfestigenden Querschnitts bewegt wird, so gewählt wird, dass er gegenüber einem Abschnitt einer Verzugsfeldisolinie, entlang dessen der Auftreffbereich beim Abtasten des zeitlich zuerst zu verfestigenden Querschnitts bewegt wird, eine unterschiedliche Lage und/oder Orientierung in der Bauebene aufweist, und einen dritten Schritt, in dem Steuerdaten entsprechend dem im zweiten Schritt erzeugten Datenmodell für die Generierung eines Steuerdatensatzes für die additive Herstellvorrichtung bereitgestellt werden.

Die zwei bei der Herstellung zeitlich aufeinanderfolgend, bevorzugt zeitlich unmittelbar aufeinanderfolgend, zu verfestigenden Querschnitte eines Objektabschnitts können dabei insbesondere in aufeinanderliegenden, d.h. unmittelbar nacheinander aufgebrachten, Schichten des Aufbaumaterials liegen. Der Objektabschnitt kann dabei ein Abschnitt sein, der durch eine Anzahl (insbesondere zwei) Schichten des Aufbaumaterials definiert ist (d.h. in einer Richtung senkrecht zur Bauebene begrenzt ist), und/oder ein Abschnitt, der in Bezug auf die Ausdehnung des Objekts in zumindest einer Richtung parallel zu der Bauebene einen Teil des Objekts bildet. Der Begriff "Anzahl" ist in der vorliegenden Anmeldung stets im Sinne von "ein oder mehrere" zu verstehen.

Die Energieeintragseinrichtung ist dazu geeignet, Energie in Form eines oder mehrerer Energiestrahlen in das Aufbaumaterial einzutragen. Beispielsweise kann eine Energieeintragseinrichtung einen oder mehrere Laser umfassen zum Erzeugen einer Laserstrahlung (elektromagnetische Strahlung) oder eine oder mehrere Energiequellen zum Erzeugen einer Teilchenstrahlung, z. B. eine Elektronenstrahlquelle zum Erzeugen eines Elektronenstrahls. Durch die in eine Aufbaumaterialschicht eingebrachte Energie wird das Aufbaumaterial teilweise oder vollständig aufgeschmolzen, so dass es nach seiner Abkühlung als Festkörper vorliegt. Der Begriff "Energiestrahlbündel" bringt dabei zum Ausdruck, dass ein einzelner Energiestrahl oder eine Mehrzahl von Energiestrahlen auf einen definierten Bereich in der Bauebene gerichtet werden können, der eine vorab definierte Größe und/oder geometrische Form aufweist und daher als Auftreffbereich (und nicht Auftreffpunkt) bezeichnet wird.

Zum Verfestigen des Aufbaumaterials wird der Auftreffbereich des Energiestrahlbündels in der Bauebene entlang einer Anzahl von Verfestigungsbahnen bewegt. Da der Auftreffbereich bzw. dessen Wirkbereich in der Bauebene eine Flächenausdehnung aufweist und in der Regel nicht punktförmig ist, kann eine Verfestigungsbahn insbesondere keine Linie sein, sondern eine quer zu ihrer Haupterstreckungsrichtung, d. h. quer zu ihrer längsten Ausdehnung, von null verschiedene Abmessung (Breite bzw. Spurbreite) aufweisen.

Ein Steuerdatensatz ist eine Abfolge von Befehlen, welche das schichtweise Aufbringen des Aufbaumaterials in der Bauebene und das selektive Verfestigen der dem Objektquerschnitt in der jeweiligen Schicht entsprechenden Stellen durch Abtasten mit dem Energiestrahlbündel spezifizieren. Den Steuerdaten des Steuerdatensatzes liegt ein computerbasiertes Modell des herzustellenden dreidimensionalen Objekts zugrunde, beispielsweise ein CAD-Modell, aus dem für jede Schicht die dem jeweiligen Objektquerschnitt entsprechenden und mit dem Energiestrahlbündel abzutastenden Stellen ermittelt werden. Somit umfassen die Steuerdaten Positionsinformationen der selektiv zu verfestigenden Stellen der jeweiligen Querschnitte bzw. Aufbaumaterialschichten. Weiter spezifizieren die Steuerdaten, wie die Verfestigung des Aufbaumaterials während der Herstellung des Objekts durchzuführen ist. Hierzu gehört beispielsweise eine Abtastreihenfolge der mit dem Energiestrahlbündel abzutastenden Stellen, d.h. der Verfestigungsbahnen, sowie Energieeintragsparameter, die unter anderem eine Energiedichte des Energiestrahlbündels, eine Geschwindigkeit, mit der der Auftreffbereich des Energiestrahlbündels über die Aufbaumaterialschicht bewegt wird, sowie eine geometrische Form und/oder Größe des Auftreffbereichs spezifizieren. Die Gesamtheit aller zur Durchführung eines Herstellungsvorganges erforderlicher Steuerdaten wird dabei als Steuerdatensatz bezeichnet.

Im Rahmen der Erfindung wird der Auftreffbereich des Energiestrahlbündels dabei zumindest in zwei aufeinanderfolgenden selektiv zu verfestigenden Aufbaumaterialschichten zumindest abschnittsweise entlang von Verzugsfeldisolinien bewegt. Als Isolinie wird dabei eine Linie bezeichnet, die Punkte desselben Wertes (Isowert) verbindet. Im dreidimensionalen Raum werden Punkte desselben Wertes (Isowert) entsprechend als Isoflächen bezeichnet. Isolinien und Isoflächen verlaufen somit definitionsgemäß senkrecht zu einem Gradienten der Feldstärke. Isolinien und Isoflächen werden in der Regel prinzipiell anhand eines Vektor- oder Skalarfelds ermittelt, im vorliegenden Falle also anhand eines Verzugsfelds, welches beispielsweise ein Eigenspannungsfeld und/oder ein Deformationsfeld sein kann. Das Verzugsfeld, auf dessen Basis die Verzugsfeldisolinien (im genannten Beispiel Eigenspannungsfeldisolinien bzw. Deformationsfeldisolinien) berechnet werden, kann sich dabei auf Deformationen des Objekts und/oder auf Eigenspannungen in dem Objekt beziehen, wie sie ohne das oben beschriebene erfindungsgemäße Abtasten des Aufbaumaterials entlang von Verzugsfeldisolinien erzielt werden würden. Voraussetzung ist somit, dass eine Information über das Verzugsfeld in dem Objektabschnitt, welche eine Berechnung von Verzugsfeldisolinien erlaubt, bereits vor Herstellung des dreidimensionalen Objekts vorliegt oder zumindest vor der selektiven Verfestigung einer Aufbaumaterialschicht, in der der Auftreffbereich erfindungsgemäß zumindest abschnittsweise entlang einer Verzugsfeldlinie bewegt werden soll.

Der Erfinder hat erkannt, dass sich Eigenspannungen bevorzugt parallel zur Bewegungsrichtung des Auftreffbereichs des Energiestrahlbündels ausbilden. Dadurch, dass der Auftreffbereich erfindungsgemäß entlang von Verzugsfeldisolinien bewegt wird, d.h. senkrecht zu einem Gradienten des Verzugsfelds und somit senkrecht zu den lokalen Verzugsrichtungen, wird diesem Verzug entgegengewirkt. Dadurch können beispielsweise Eigenspannungen und Deformationen in einem unter Verwendung erfindungsgemäß bereitgestellter Steuerdaten hergestellten Objekt verringert werden und somit dessen Maßhaltigkeit und Qualität verbessert werden. Insbesondere können auch bereits während der Herstellung auftretende Deformationen des Objekts zumindest verringert werden, wodurch beispielsweise eine Kollision zwischen einem Beschichtungselement (z.B. einer Klinge) des Beschichters und einer bereits selektiv verfestigten Aufbaumaterialschicht vermieden werden kann.

Ferner wird der Auftreffbereich erfindungsgemäß in aufeinanderfolgend zu verfestigenden Querschnitten des Objektabschnitts entlang von Verzugsfeldisolinien bewegt, die in Bezug auf die Bauebene zumindest abschnittsweise eine unterschiedliche Lage und/oder Orientierung aufweisen. Mit "unterschiedlicher Lage und/oder Orientierung" ist dabei gemeint, dass die Verzugsfeldisolinienabschnitte gegeneinander versetzt sind und/oder in der Bauebene einen Winkel miteinander einschließen. Dies schließt also identische Linienabschnitte in der Bauebene aus. Demgemäß werden zwei nacheinander zu verfestigende Querschnitte bzw. zwei selektiv zu verfestigende Aufbaumaterialschichten also selbst dann zumindest abschnittsweise nicht entlang derselben Verfestigungsbahn abgetastet, wenn für die Schichten dieselben Verzugsfeldisolinien berechnet werden. Durch die unterschiedliche Lage und/oder Orientierung der Verzugsfeldlinienabschnitte in aufeinanderfolgenden Querschnitten bzw. Aufbaumaterialschichten können beispielsweise Vorzugsrichtungen mechanischer Kennwerte in dem fertig hergestellten Objekt vermieden oder zumindest verringert werden, was die Maßhaltigkeit und Qualität des dreidimensionalen Objekts weiter verbessern kann.

Ein erfindungsgemäßes Verfahren gemäß einem weiteren Aspekt der Erfindung dient der computergestützten Ansteuerung einer Anzahl von Energieeintragseinrichtungen einer additiven Herstellvorrichtung zur Herstellung eines dreidimensionalen Objekts mittels derselben, wobei das Objekt hergestellt wird durch Aufbringen eines Aufbaumaterials, Schicht auf Schicht und Verfestigen des Aufbaumaterials mittels Zufuhr von Strahlungsenergie zu Stellen, vorzugsweise allen Stellen, in einer Schicht, die dem Querschnitt des Objekts in dieser Schicht zugeordnet sind, indem zumindest eine Energieeintragseinrichtung zum Eintragen von Energie in das Aufbaumaterial diese Stellen mit mindestens einem Energiestrahlbündel gemäß einem Satz von Energieeintragsparametern entlang einer Anzahl von Verfestigungsbahnen in einer Bauebene abtastet. In dem Verfahren wird die Anzahl von Energieeintragseinrichtungen so angesteuert, dass für zwei bei der Herstellung zeitlich aufeinanderfolgend, bevorzugt zeitlich unmittelbar aufeinanderfolgend, zu verfestigende Querschnitte eines Objektabschnitts für jeden der beiden Querschnitte ein Abtasten der Aufbaumaterialschicht mit zumindest einem Energiestrahlbündel entlang zumindest einer Verfestigungsbahn spezifiziert wird, wobei spezifiziert wird, dass beim Abtasten der Stellen einer Aufbaumaterialschicht, die dem jeweiligen zu verfestigenden Querschnitt zugeordnet sind, der Auftreffbereich zumindest eines Energiestrahlbündels auf dem Aufbaumaterial entlang zumindest eines Abschnitts einer Verzugsfeldisolinie bewegt wird, wobei ein Abschnitt einer Verzugsfeldisolinie, entlang dessen der Auftreffbereich beim Abtasten des zeitlich später zu verfestigenden Querschnitts bewegt wird, so gewählt wird, dass er gegenüber einem Abschnitt einer Verzugsfeldisolinie, entlang dessen der Auftreffbereich beim Abtasten des zeitlich zuerst zu verfestigenden Querschnitts bewegt wird, eine unterschiedliche Lage und/oder Orientierung in der Bauebene aufweist. Damit ist es beispielsweise möglich, die oben in Bezug auf ein Verfahren zur Bereitstellung von Steuerdaten ausgeführten Wirkungen auch mit einem Verfahren zur computergestützten Ansteuerung einer Anzahl von Energieeintragseinrichtungen im Rahmen eines additiven Herstellvorgangs zu erzielen.

Vorzugsweise wird in den oben beschriebenen Verfahren bzw. in zumindest einem der Verfahren für die beiden Querschnitte spezifiziert, dass der Auftreffbereich entlang einer Mehrzahl von Abschnitten von Verzugsfeldisolinien bewegt wird, die so gewählt werden, dass ihr gegenseitiger Abstand im Wesentlichen der Breite bzw. Spurbreite einer Verfestigungsbahn auf dem Aufbaumaterial quer zur Bewegungsrichtung des Auftreffbereichs entspricht. Die Breite, auch als Spurbreite bezeichnet, einer Verfestigungsbahn ist eine Abmessung einer Verfestigungsbahn senkrecht zu der Richtung, in der der Auftreffbereich entlang der Verfestigungsbahn geführt wird bzw. zu führen ist. Diese Breite kann insbesondere der Größe eines Wirkungsbereichs des Energiestrahlbündels in der Bauebene entsprechen, insbesondere der Größe des durch das Energiestrahlbündel in der Bauebene erzeugten Schmelzbads. Die Breite einer Verfestigungsbahn kann örtlich variieren, beispielsweise in Abhängigkeit eines Auftreffwinkels des Energiestrahlbündels auf die Bauebene. Daher ist hier eine lokale Breite der Verfestigungsbahn gemeint, d.h. ein Abstand zwischen benachbarten Verzugsfeldisolinienabschnitten kann über die Bauebene hinweg variieren. Dadurch, dass ein Abstand benachbarter Verzugsfeldisolinienabschnitten entsprechend der Breite der Verfestigungsbahn(en) gewählt wird, kann beispielsweise sichergestellt werden, dass die Verfestigungsbahnen einen vorab definierten Abstand zueinander aufweisen oder einen Abstand, der innerhalb eines vorab festgelegten Intervalls liegt, wodurch beispielsweise der Energieeintrag homogenisiert werden kann, was ebenfalls die Qualität des herzustellenden Objekts weiter verbessert.

Vorzugsweise weist ein Abschnitt einer Verzugsfeldisolinie, entlang dessen der Auftreffbereich beim Abtasten des zeitlich später zu verfestigenden Querschnitts bewegt wird, innerhalb der Bauebene einen Versatz gegenüber einem Abschnitt einer Verzugsfeldisolinie auf, entlang dessen der Auftreffbereich beim Abtasten des zeitlich zuerst zu verfestigenden Querschnitts bewegt wird. Es kann somit bevorzugt sein, eine Erstreckungsrichtung bzw. Orientierung der Verzugsfeldisolinienabschnitte in der Bauebene in aufeinanderfolgend selektiv zu verfestigenden Schichten beizubehalten und durch einen lateralen Versatz des Verzugsfeldisolinienabschnitts in der zeitlich später zu verfestigenden Schicht deren Position in der Bauebene anzupassen. Somit ist es beispielsweise möglich, in nacheinander zu verfestigenden Aufbaumaterialschichten Verfestigungsbahnen mit unterschiedlichen Positionen in der Bauebene bereitzustellen. Dadurch kann beispielsweise die Qualität des herzustellenden Objekts weiter verbessert werden.

Vorzugsweise erstrecken sich die Abschnitte von Verzugsfeldisolinien, entlang derer der Auftreffbereich in den beiden Querschnitten bewegt wird, jeweils über die gesamte Länge einer Verzugsfeldisolinie. Damit kann beispielsweise der Energieeintrag in eine selektiv zu verfestigende Aufbaumaterialschicht homogenisiert werden.

Vorzugsweise werden die Abschnitte von Verzugsfeldisolinien, entlang derer der Auftreffbereich in den beiden Querschnitten bewegt wird, so gewählt, dass die Abschnitte in unterschiedlichen Querschnitten unterschiedlichen Verzugsfeldisoflächen angehören. Unter einer Verzugsfeldisofläche wird wie oben erwähnt eine Äquipotentialfläche des Verzugsfelds verstanden, also insbesondere eine Eigenspannungsfeldisofläche (Fläche mit konstantem Eigenspannungswert) bzw. eine Deformationsfeldisofläche (Fläche mit konstantem Deformationswert). Damit ist es auf einfache Art und Weise möglich, Verzugsfeldisolinienabschnitte für die Querschnitte in aufeinanderfolgenden Schichten zu ermitteln, die eine unterschiedliche Lage und/oder Orientierung in Bezug aufeinander aufweisen.

Eine erfindungsgemäße Vorrichtung dient zur computergestützten Ansteuerung einer Anzahl von Energieeintragseinrichtungen einer additiven Herstellvorrichtung zur Herstellung eines dreidimensionalen Objekts mittels derselben, wobei das Objekt hergestellt wird durch Aufbringen eines Aufbaumaterials, Schicht auf Schicht und Verfestigen des Aufbaumaterials mittels Zufuhr von Strahlungsenergie zu Stellen, vorzugsweise allen Stellen, in einer Schicht, die dem Querschnitt des Objekts in dieser Schicht zugeordnet sind, indem zumindest eine Energieeintragseinrichtung zum Eintragen von Energie in das Aufbaumaterial diese Stellen mit mindestens einem Energiestrahlbündel gemäß einem Satz von Energieeintragsparametern entlang einer Anzahl von Verfestigungsbahnen in einer Bauebene abtastet. Die Vorrichtung ist so ausgelegt, dass die Anzahl von Energieeintragseinrichtungen so angesteuert wird, dass für zwei bei der Herstellung zeitlich aufeinanderfolgend, bevorzugt zeitlich unmittelbar aufeinanderfolgend, zu verfestigende Querschnitte eines Objektabschnitts für jeden der beiden Querschnitte ein Abtasten der Aufbaumaterialschicht mit zumindest einem Energiestrahlbündel entlang zumindest einer Verfestigungsbahn spezifiziert wird, wobei spezifiziert wird, dass beim Abtasten der Stellen einer Aufbaumaterialschicht, die dem jeweiligen zu verfestigenden Querschnitt zugeordnet sind, der Auftreffbereich zumindest eines Energiestrahlbündels auf dem Aufbaumaterial entlang zumindest eines Abschnitts einer Verzugsfeldisolinie bewegt wird, wobei ein Abschnitt einer Verzugsfeldisolinie, entlang dessen der Auftreffbereich beim Abtasten des zeitlich später zu verfestigenden Querschnitts bewegt wird, so gewählt wird, dass er gegenüber einem Abschnitt einer Verzugsfeldisolinie, entlang dessen der Auftreffbereich beim Abtasten des zeitlich zuerst zu verfestigenden Querschnitts bewegt wird, eine unterschiedliche Lage und/oder Orientierung in der Bauebene aufweist. Mit einer derartigen Vorrichtung zur computergestützten Ansteuerung einer Anzahl von Energieeintragseinrichtungen ist es beispielsweise ebenfalls möglich, die oben in Bezug auf das Verfahren zur computergestützten Ansteuerung einer Anzahl von Energieeintragseinrichtungen beschriebenen Wirkungen zu erzielen.

Vorzugsweise umfasst die Vorrichtung zur computergestützten Ansteuerung einer Anzahl von Energieeintragseinrichtungen eine Isolinien-Entgegennahmeeinheit zur Entgegennahme von Daten, welche die Lage (insbesondere die Position und den Verlauf) von Verzugsfeldisolinien in dem zumindest einen Objekt beschreiben, und/oder eine Isolinien-Speichereinheit zur Speicherung von Daten, welche die Lage (insbesondere die Position und den Verlauf) von Verzugsfeldisolinien in dem zumindest einen Objekt beschreiben. Damit ist es beispielsweise möglich, die Anzahl von Energieeintragseinrichtungen unter Zugrundelegung von vorab bereitgestellten Verzugsfeldisolinien anzusteuern.

Eine erfindungsgemäße additive Herstellvorrichtung dient der Herstellung eines dreidimensionalen Objekts, wobei das Objekt hergestellt wird durch Aufbringen eines Aufbaumaterials, Schicht auf Schicht, und Verfestigen des Aufbaumaterials mittels Zufuhr von Strahlungsenergie zu Stellen, vorzugsweise allen Stellen, in einer Schicht, die dem Querschnitt des Objekts in dieser Schicht zugeordnet sind, indem zumindest eine Energieeintragseinrichtung zum Eintragen von Energie in das Aufbaumaterial diese Stellen mit mindestens einem Energiestrahlbündel gemäß einem Satz von Energieeintragsparametern entlang einer Anzahl von Verfestigungsbahnen in einer Bauebene abtastet, wobei die additive Herstellvorrichtung eine oben beschriebene Vorrichtung zur computergestützten Ansteuerung einer Anzahl von Energieeintragseinrichtungen aufweist und/oder damit signaltechnisch verbunden ist. Damit ist es beispielsweise möglich, die oben in Bezug auf die Verfahren beschriebenen Wirkungen auch mit einer additiven Herstellvorrichtung zu erzielen.

Ein erfindungsgemäßes additives Herstellverfahren dient der Herstellung eines dreidimensionalen Objekts, wobei das Objekt hergestellt wird durch Aufbringen eines Aufbaumaterials, Schicht auf Schicht und Verfestigen des Aufbaumaterials mittels Zufuhr von Strahlungsenergie zu Stellen, vorzugsweise allen Stellen, in einer Schicht, die dem Querschnitt des Objekts in dieser Schicht zugeordnet sind, indem zumindest eine Energieeintragseinrichtung zum Eintragen von Energie in das Aufbaumaterial diese Stellen mit mindestens einem Energiestrahlbündel gemäß einem Satz von Energieeintragsparametern entlang einer Anzahl von Verfestigungsbahnen in einer Bauebene abtastet, wobei ein oben beschriebenes computergestütztes Verfahren zur Bereitstellung von Steuerdaten und/oder ein oben beschriebenes Verfahren zur computergestützten Ansteuerung der zumindest einen Energieeintragseinrichtungen Bestandteil des additiven Herstellverfahrens ist. Damit ist es beispielsweise möglich, die in Bezug auf die oben beschriebenen Verfahren beschriebenen Wirkungen auch mit einem additiven Herstellungsverfahren zu erzielen.

Vorzugsweise wird in dem additiven Herstellverfahren und/oder in einem der oben beschriebenen Verfahren mittels Simulation das Eigenspannungsfeld und/oder Deformationsfeld für die beiden Querschnitte ermittelt und nachfolgend werden die Verzugsfeldisolinien, bevorzugt durch einen Marching Squares-Algorithmus, ermittelt. Zusätzlich oder alternativ wird vorzugsweise anhand einer Vermessung eines im Vorhinein hergestellten Probekörpers das Eigenspannungsfeld und/oder Deformationsfeld für den Objektabschnitt ermittelt und nachfolgend werden die Verzugsfeldisolinien für die beiden Querschnitte, bevorzugt durch einen Marching Squares-Algorithmus, ermittelt. Zusätzlich oder alternativ werden Verzugsfeldisolinien der beiden Querschnitte ermittelt, indem das Eigenspannungsfeld und/oder Deformationsfeld in den beiden Querschnitten unter Zugrundelegung von Werten von während des Herstellungsvorgangs des Objektabschnitts gemessenen Prozessmonitorparametern ermittelt wird.

Ein Deformationsfeld ist ein Vektorfeld, welches jedem Punkt im ursprünglichen CAD-Modell des dreidimensionalen Objekts einen Deformationsvektor zuordnet, der einen (simulierten oder gemessenen) Versatz beschreibt, wenn das Objekt ohne das erfindungsgemäße Vorgehen hergestellt werden würde. Das Eigenspannungsfeld beschreibt eine räumliche Verteilung der in dem Objekt auftretenden mechanischen Spannungen (z.B. als Spannungstensor), wenn das Objekt ohne das erfindungsgemäße Vorgehen hergestellt werden würde.

Im Rahmen der Erfindung wird also zur Berechnung der Verzugsfeldisolinien das Deformationsfeld bzw. Eigenspannungsfeld eines Objekts unter der Annahme, dass dieses ohne das erfindungsgemäße Abtasten des Aufbaumaterials entlang von Verzugsfeldisolinien hergestellt wird, zugrunde gelegt. Diese Annahme kann mittels Simulation des Herstellungsvorgangs bzw. des herzustellenden Objekts realisiert werden oder durch Herstellen eines entsprechenden Probekörpers. Der Probekörper ist dabei ein durch ein additives Herstellungsverfahren hergestelltes dreidimensionales Objekt, welches sich von dem in einem erfindungsgemäßen additiven Herstellungsverfahren herzustellenden Objekt lediglich dadurch unterscheidet, dass die Verfestigungsbahnen, entlang derer der Auftreffbereich des bzw. der Energiestrahlbündel zum selektiven Verfestigen der Aufbaumaterialschichten verfahren wird, nicht entlang von Verzugsfeldisolinien gewählt werden. Beispielsweise kann der Auftreffbereich des Energiestrahlbündels bei der Herstellung des Probekörpers in jeder Schicht streifenförmig, d.h. in sogenannten Hatch lines, über die zu verfestigenden Stellen des Aufbaumaterials bewegt werden.

Eine Simulation oder Vermessung eines Probekörpers zum Ermitteln eines Verzugsfelds wird dabei in der Regel vor der additiven Herstellung des herzustellenden Objekts durchgeführt, so dass die Verzugsfeldisolinien bereits im Voraus vorliegen und die Steuerdaten zur Ansteuerung der zumindest einen Energieeintragseinrichtung bereits im Voraus ermittelt werden können. Dies geschieht vorzugsweise unter Verwendung eines Marching-Squares Algorithmus, welcher aus einem zweidimensionalen Skalarfeld (skalare Deformationswerte bzw. skalare Eigenspannungswerte in der dem jeweiligen Querschnitt entsprechenden Objektebene) Isolinien (Deformationsfeldisolinien bzw. Eigenspannungsfeldisolinien) berechnet. Der Algorithmus beruht dabei auf einer Zerlegung des Skalarfelds in quadratische Gitterzellen, wobei für jede Gitterzelle deren Eckwerte mit einem vorgegebenen Isowert verglichen werden, d.h. die Isolinie anhand der Eckwerte berechnet werden.

Eine Berechnung der Verzugsfeldisolinien unter Zugrundelegung von Prozessmonitorparametern hingegen erfolgt während der Herstellung des dreidimensionalen Objekts, jedoch vor der selektiven Verfestigung des jeweiligen Querschnitts, für den die Verfestigungsbahnen anhand von Verzugsfeldisolinien berechnet werden soll. Unter Prozessmonitorwerten werden Messwerte verstanden, die aus einer mittels einem geeigneten Sensor oder Detektor während dem Herstellungsvorgang erfassten Prozessstrahlung ermittelt werden. Eine Prozessstrahlung kann beispielsweise eine elektromagnetische und/oder thermische Strahlung sein, die von einer oder mehreren aufgebrachten und/oder bereits selektiv verfestigten Schichten ausgeht und durch den Sensor/Detektor erfasst wird. Ein entsprechender Messwert kann ein Temperaturwert bzw. ein Strahlungswert sein. Bei einem Lasersinter- oder Laserschmelzverfahren kann ein derartiges Prozessmonitoring beispielsweise eine Schmelzbadüberwachung umfassen, bei der eine thermische und/oder elektromagnetische Strahlung erfasst wird, die beim Auftreffen des Energiestrahlbündels auf das Aufbaumaterial emittiert wird. Die Verzugsfeldisolinien können beispielsweise basierend auf einer Temperaturverteilung oder maximalen Temperaturdifferenzen in einer oder mehreren Schichten berechnet werden.

Die erfassten Messwerte (Prozessmonitorwerte) sind dabei in der Regel skalare Werte, die in Bezug auf ihre (zweidimensionale) Verteilung in der Bauebene erfasst werden und somit in der Regel bereits als Skalarfeld vorliegen. Eine Berechnung der Verzugsfeldisolinien erfolgt dann anhand des Skalarfelds, beispielsweise durch einen Marching Squares-Algorithmus.

Durch das oben beschriebene Berechnen der Verzugsfeldisolinien unter Zugrundelegung einer Simulation, eines Probekörpers bzw. von Prozessmonitorparametern sind verschiedene Vorgehen bereitgestellt, durch die es beispielsweise möglich ist, Verzugsfeldisolinien auf einfache Art und Weise zu ermitteln.

Ein erfindungsgemäßes Computerprogramm umfasst Programmcodemittel, um alle Schritte eines der oben beschriebenen Verfahren auszuführen, wenn das Computerprogramm auf einem Datenprozessor, insbesondere einem mit einer additiven Herstellvorrichtung zusammenwirkenden Datenprozessor, ausgeführt wird.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht einer additiven Herstellvorrichtung zum Herstellen eines dreidimensionalen Objekts gemäß einer Ausführungsform der vorliegenden Erfindung,
- Fig. 2: ist ein schematisches Blockdiagramm, welches schematisch ein Verfahren zur Bereitstellung von Steuerdaten für die in Fig. 1 gezeigte Herstellvorrichtung zeigt, und
- Fig. 3a: zeigt schematisch eine Draufsicht auf einen Ausschnitt eines Baufelds mit Verfestigungsbahnen in einer ersten Schicht des Aufbaumaterials und Fig. 3b zeigt schematisch eine Draufsicht auf den in Fig. 3a gezeigten Ausschnitt des Baufelds mit Verfestigungsbahnen in einer zweiten Schicht des Aufbaumaterials.

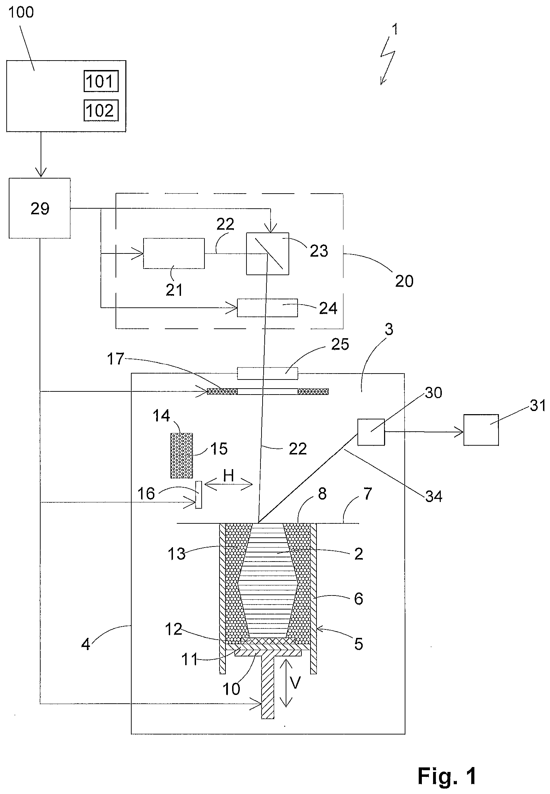

Im Folgenden wird mit Bezug auf Fig. 1 ein Beispiel einer additiven Herstellvorrichtung beschrieben, mit der die vorliegende Erfindung ausgeführt werden kann. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, welche auch als Bauebene bezeichnet wird, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den ganzen zu beschichtenden Bereich. Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner eine Energieeintragseinrichtung, die in Fig. 1 als Belichtungsvorrichtung 20 ausgebildet ist. Die Belichtungsvorrichtung 20 umfasst einen Laser 21, der einen Laserstrahl 22 erzeugt, der über eine Umlenkvorrichtung 23 umgelenkt und durch eine Fokussiervorrichtung 24 über ein Einkoppelfenster 25, das an der Oberseite der Prozesskammer 3 in der Kammerwandung 4 angebracht ist, auf die Arbeitsebene 7 fokussiert wird.

Optional enthält die Lasersintervorrichtung einen Sensor 30, der dazu geeignet ist, eine Prozessstrahlung 34, welche beim Auftreffen des Laserstrahls 22 auf das Aufbaumaterial 15 in der Arbeitsebene 7 emittiert wird, zu erfassen. Der Sensor 30 steht in Verbindung mit einer (optionalen) Prozessüberwachungsvorrichtung 31. Der Sensor 30 kann dabei wie in Fig. 1 gezeigt in der Prozesskammer 3 angeordnet sein. Alternativ dazu kann der Sensor 30 außerhalb der Prozesskammer 3 angeordnet sein und die Prozessstrahlung 34 durch das Einkoppelfenster 25 oder ein weiteres Fenster (nicht gezeigt) auf den Sensor 30 auftreffen.

Der Sensor 30 kann beispielsweise als optische Kamera (z. B. CCD oder Bildzellendetektor) oder als Fotodiode ausgeführt sein zum Erfassen einer von dem auftreffenden Laserstrahl 22 emittierten elektromagnetischen Strahlung, oder als Temperaturfühler zum Erfassen einer emittierten thermischen Strahlung. Ferner können auch mehrere Sensoren 30 vorgesehen sein zum Erfassen einer optischen und/oder thermischen Prozessstrahlung 34.

Die Prozessüberwachungsvorrichtung 31 ist vorzugsweise dazu ausgebildet, ein von dem Sensor 30 erfasstes Signal auszuwerten und Verzugsfeld-Isolinien zu ermitteln.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es (z. B. über ein Netzwerk) in die Vorrichtung, insbesondere in die Steuereinheit geladen werden kann.

Die Steuereinheit 29 ist über eine Datenverbindung mit einer Vorrichtung 100 zur Bereitstellung von Steuerdaten verbunden, welche optional zumindest eine Isolinien-Entgegennahmeeinheit 101 und eine Isolinien-Speichereinheit 102 umfasst. Die Vorrichtung zur Bereitstellung von Steuerdaten 100 übermittelt Steuerdaten an die Steuereinheit 29, welche von der Steuereinheit 29 bei der Durchführung des Herstellvorgangs eines dreidimensionalen Objekts zugrunde gelegt werden. Die Vorrichtung 100 zur Bereitstellung von Steuerdaten kann Bestandteil der Lasersintervorrichtung 1 sein oder separat von dieser bereitgestellt sein. Die Vorrichtung 100 zur Bereitstellung von Steuerdaten kann beispielsweise ein entsprechend programmierter Rechner sein oder mittels Software realisiert sein, die z.B. auf der Steuereinrichtung 29 läuft.

Die Belichtungsvorrichtung 20 wird bei der in Fig. 1 gezeigten Lasersinter- oder Laserschmelzvorrichtung durch die Steuereinheit 29 gesteuert. Alternativ kann auch eine separate Vorrichtung zur Ansteuerung der Belichtungsvorrichtung 20 bereitgestellt sein, die den Betrieb der Belichtungsvorrichtung 20 steuert. Eine derartige Vorrichtung zur Ansteuerung der Belichtungsvorrichtung 20 kann über eine Datenverbindung mit der Vorrichtung 100 zur Bereitstellung von Steuerdaten verbunden sein um entsprechende Steuerdaten von dieser zu empfangen. Alternativ kann die Vorrichtung zur Ansteuerung der Belichtungsvorrichtung 20 selbst dazu ausgebildet sein, entsprechende Steuerdaten bereitzustellen, beispielsweise indem sie eine entsprechende Software umfasst. In diesem Fall sind die Isolinien-Entgegennahmeeinheit 101 und eine Isolinien-Speichereinheit 102 vorzugsweise nicht wie in Fig.1 gezeigt Bestandteil der Vorrichtung 100 zur Bereitstellung von Steuerdaten, sondern Bestandteil der Vorrichtung zur Ansteuerung der Belichtungsvorrichtung 20.

Im Betrieb der Lasersinter- oder Laserschmelzvorrichtung 1 wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8, bringt dort pulverförmiges Aufbaumaterial 15 auf die Bauunterlage oder eine bereits vorher vorhandene Pulverschicht auf und zieht es zu einer Pulverschicht aus. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels einer Strahlungsheizung 17 auf eine Arbeitstemperatur aufgeheizt.

Anschließend wird die aufgebrachte Pulverschicht an den Stellen, die dem Querschnitt des herzustellenden Objekts 2 entsprechen, von dem Laserstrahl 22 abgetastet, sodass das pulverförmige Aufbaumaterial 15 an den Stellen verfestigt wird, die dem Querschnitt des herzustellenden Objekts 2 entsprechen. Die aufgebrachte Pulverschicht wird dabei entlang vorab festgelegter Verfestigungsbahnen abgetastet, d.h. der Auftreffpunkt bzw. Auftreffbereich des Laserstrahls 22 in der Arbeitsebene 7 wird entlang den Verfestigungsbahnen bewegt. Diese Schritte werden solange wiederholt, bis das Objekt 2 fertiggestellt ist und der Prozesskammer 3 entnommen werden kann.

Während des Herstellungsprozesses erfasst optional der Sensor 30 eine von dem Auftreffbereich des Laserstrahls 22 ausgehende Prozessstrahlung 34 und leitet ein entsprechendes Signal an die Prozessüberwachungsvorrichtung 31 weiter, die das Signal dann auswertet.

Die einzelnen Komponenten der Lasersinter- oder Laserschmelzvorrichtung 1, insbesondere der Träger 10, der Beschichter 16 und die Belichtungsvorrichtung 20, werden dabei durch die Steuereinheit 29 entsprechend einem von der Vorrichtung 100 zur Bereitstellung von Steuerdaten bereitgestellten Steuerdatensatz angesteuert. Optional kann die Belichtungsvorrichtung 20 wie oben erwähnt durch eine separate Vorrichtung zur Ansteuerung der Belichtungsvorrichtung 20 angesteuert werden.

Ein derartiger Steuerdatensatz basiert auf einem computergestützen Modell (in der Regel CAD-Modell) des herzustellenden Objekts und spezifiziert für jeden Punkt in einer selektiv zu verfestigenden Schicht, wie die Verfestigung durchzuführen ist. Bei einem Lasersinter- oder Laserschmelzverfahren sind dies beispielsweise Informationen über die Laserintensität bzw. Energiedichte der Laserstrahlung, den Laserstrahldurchmesser und die Verfahrgeschwindigkeit, mit der der Auftreffpunkt bzw. Auftreffbereich des Laserstrahls über die aufgebrachte Pulverschicht verfahren wird, sowie über die Verfestigungsbahnen, entlang denen der Auftreffpunkt bzw. Auftreffbereich des Laserstrahls verfahren wird.

Zum Bereitstellen von Steuerdaten umfasst die Vorrichtung 100 zumindest die Isolinien-Entgegennahmeeinheit 101 und die Isolinien-Speichereinheit 102 (s. Fig. 1) zur Entgegennahme bzw. Speicherung von Daten, welche Verzugsfeldisolinien in dem zumindest einen Objekt beschreiben. Weiter kann die Vorrichtung 100 beispielsweise eine Modelldaten-Zugriffseinheit (nicht gezeigt) umfassen zum Zugreifen auf das computerbasierte Modell (CAD-Modell) des herzustellenden Objekts 2, sowie eine Datenmodell-Erzeugungseinheit (nicht gezeigt), zum Erzeugen eines Datenmodells der Objektquerschnitte, welches das Abtasten der Aufbaumaterialschichten mit dem Laserstrahl 22, insbesondere die Verfestigungsbahnen, spezifiziert. Weiter kann die Vorrichtung 100 zur Bereitstellung von Steuerbefehlen eine Steuerdatengenerierungseinheit (nicht gezeigt) zum Erzeugen von Steuerdaten umfassen.

Bei der Modelldaten-Zugriffseinheit und der Isolinien-Entgegennahmeeinheit handelt es sich z.B. um eine Software- oder Hardware-Schnittstelle, mittels derer ein Zugriff auf die im Speicher eines CAD-Entwurfsrechners abgelegten Modelldaten bzw. die berechneten Verzugsfeldisolinien (gegebenenfalls über ein Netzwerk) möglich ist. Alternativ kann es sich bei der oder den Zugriffseinheit(en) um ein Lesegerät handeln, dass die auf einem mobilen Datenträger gespeicherten Daten liest.

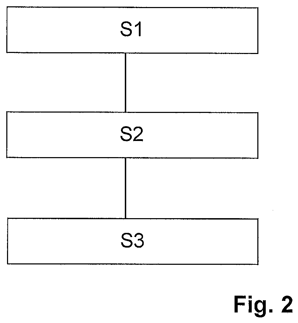

Das Erzeugen von Steuerdaten für die Lasersinter- oder Laserschmelzvorrichtung 1 wird im Folgenden mit Bezug auf Fig. 2 beschrieben. In einem ersten Schritt S1 wird, z.B. durch die Modelldaten-Zugriffseinheit, auf die computerbasierte Modelldaten (CAD-Daten) des herzustellenden Objekts zugegriffen. Vorzugsweise liegen die Modelldaten bereits als Schichtinformation vor, so dass im Schritt S1 ein Zugriff auf computerbasierte Modelldaten der zu verfestigenden Objektquerschnitte erfolgt.

In einem zweiten Schritt S2 wird, z.B. durch die Datenmodell-Erzeugungseinheit, für jeden Objektquerschnitt (d.h. für jede selektiv zu verfestigende Aufbaumaterialschicht) ein Datenmodell erzeugt, wobei in dem Datenmodell für jeden Objektquerschnitt das Abtasten der Aufbaumaterialschicht mit dem Laserstrahl 22 entlang von Verfestigungsbahnen spezifiziert ist. Hierzu greift die Datenmodell-Erzeugungseinheit auf Verzugsfeldisoliniendaten zu, welche vorab bereitgestellt und von der Isolinien-Entgegennahmeeinheit 101 entgegengenommen wurden. Die Isolinien-Entgegennahmeeinheit 101 führt die den Verzugsfeldisolinien entsprechenden Daten der Isolinien-Speichereinheit 102 zu, wo sie gespeichert werden und zur Berechnung der Verfestigungsbahnen im Rahmen des Erzeugens des Datenmodells zur Verfügung stehen.

In einem dritten Schritt S3 werden, z.B. durch die Steuerdatengenerierungseinheit, Steuerdaten entsprechend dem im zweiten Schritt S2 erzeugten Datenmodell bereitgestellt, die der Generierung eines Steuerdatensatzes dienen. Die so bereitgestellten Steuerdaten umfassen zumindest die Verfestigungsbahnen, entlang denen der Auftreffpunkt des Laserstrahls 22 zur selektiven Verfestigung der jeweiligen Aufbaumaterialschicht zu bewegen ist, und können dann in einen Steuerdatensatz integriert werden.

Das Bereitstellen von Verzugsfeldisolinien kann bereits vor Beginn des Herstellungsvorgangs erfolgen, z.B. wenn die Verzugsfeldisolinien wie unten beschrieben anhand eines Probekörpers oder durch Simulation ermittelt werden. In diesem Fall werden die Verzugsfeldisolinien vorzugsweise im Schritt S1 von der Isolinien-Entgegennahmeeinheit 101 entgegengenommen und in der Isolinien-Speichereinheit 102 gespeichert. Damit kann bereits vor der Herstellung des dreidimensionalen Objekts ein vollständiger Steuerdatensatz bereitgestellt werden.

Wenn die Verzugsfeldisolinien während des Herstellverfahrens ermittelt werden, z.B. mittels eines Verfahrens zur Prozessüberwachung (Prozessmonitoring), dann werden die Verzugsfeldisolinien vorzugsweise im Schritt S2 von der Isolinien-Entgegennahmeeinheit 101 entgegengenommen und in der Isolinien-Speichereinheit 102 gespeichert. Die die Verfestigungsbahnen spezifizierenden Steuerdaten werden dann während der Herstellung des Objekts, jedoch vor der selektiven Verfestigung der jeweiligen Schicht, in den Steuerdatensatz integriert bzw. die Belichtungseinrichtung 20 über die Steuereinheit 29 mittels zumindest den die Verfestigungsbahnen spezifizierenden Steuerdaten angesteuert.

Das Bereitstellen der die Verfestigungsbahnen spezifizierenden Steuerdaten vor und während dem Herstellungsvorgang kann auch miteinander kombiniert werden, beispielsweise kann ein Teil der Steuerdaten bereits vor Beginn des Herstellungsvorgangs bereitgestellt werden und ein weiterer Teil der Steuerdaten erst während des Herstellungsvorgangs. Weiterhin können auch vor Beginn des Herstellungsvorgangs bereitgestellte Verzugsfeldisoliniendaten auch während des Herstellungsvorgangs abgeändert werden, z. B. aufgrund von Informationen, die durch ein Prozessmonitoring gewonnen werden.

Zum Ermitteln von Verzugsfeldisoliniendaten kann wie folgt vorgegangen werden:
Bei einem ersten Ausführungsbeispiel zur Ermittlung von Verzugsfeldisolinien wird anhand einer Computersimulation ein Herstellungsvorgang eines dreidimensionalen Objekts 2 in der Lasersinter- oder Laserschmelzvorrichtung 1 simuliert, wobei die simulierten Verfestigungsbahnen nicht entlang von Verzugsfeldisolinien verlaufen, d.h. es wird ein anderes Belichtungsmuster als das erfindungsgemäße Belichtungsmuster verwendet. Beispielsweise kann die simulierte schichtweise selektive Verfestigung unter der Annahme erfolgen, dass der Laserstrahl entlang zueinander paralleler Linien über das Baufeld verfahren wird. Anhand dieser Simulation werden die in dem Objekt resultierenden, insbesondere thermisch bedingten, mechanischen Eigenspannungen berechnet, und/oder es wird die daraus resultierende Verformung des Objekts berechnet. Anschließend werden anhand der auf dem CAD-Datensatz basierenden Schichtdaten für jeden Objektquerschnitt Eigenspannungswerte bzw. Deformationswerte in dem jeweiligen Objektquerschnitt berechnet. Diese Werte sind skalare Werte, d.h. es wird für jeden Objektquerschnitt ein skalares Verzugsfeld berechnet. Zur Berechnung skalarer Eigenspannungswerte kann z.B. eine Vergleichsspannung berechnet werden, die eine vereinfachte Beschreibung des realen mehrachsigen Spannungszustands erlaubt. Dann werden für jeden Objektquerschnitt aus dem skalaren Verzugsfeld, welches für den jeweiligen Objektquerschnitt berechnet wurde, Verzugsfeldisolinien, also Linien mit konstanten Verzugsfeldisowerten (Eigenspannungsfeldisowerte bzw. Deformationsfeldisowerte), berechnet, beispielsweise mittels eines Marching Squares-Algorithmus.

Bei einem zweiten Ausführungsbeispiel zur Ermittlung von Verzugsfeldisolinien wird ein Probekörper in der Lasersinter- oder Laserschmelzvorrichtung 1 hergestellt. Der Probekörper wird dabei unter Verwendung derselben CAD-Daten wie das herzustellende Objekt hergestellt, jedoch unter Verwendung einer anderen Belichtungsstrategie. Insbesondere verlaufen die zur Herstellung des Probekörpers gewählten Verfestigungsbahnen nicht entlang von Verzugsfeldisolinien oder Abschnitten derselben, z.B. wird der Laserstrahl entlang zueinander paralleler Linien über das Baufeld verfahren. Anschließend wird der Probekörper vermessen, d.h. die in dem Probekörper auftretenden mechanischen Eigenspannungen und/oder Verformungen werden ermittelt. Anschließend werden wie oben in Bezug auf das erste Ausführungsbeispiel für jeden Querschnitt des Objekts anhand eines Skalarfelds in dem jeweiligen Querschnitt Verzugsfeldisolinien ermittelt.

Ein drittes Ausführungsbeispiel zur Ermittlung von Verzugsfeldisolinien basiert auf Werten von während des Herstellungsvorgangs des Objekts 2 gemessenen Prozessmonitorparametern. Beispielsweise kann eine von der Auftreffstelle des Laserstrahls 22 ausgehende Prozessstrahlung 34, beispielsweise eine thermische Strahlung, durch den Sensor 30 erfasst werden und an die Prozessüberwachungsvorrichtung 31 weitergeleitet werden. Die Prozessüberwachungsvorrichtung 31 wertet dieses Signal aus und ermittelt so beispielsweise eine zweidimensionale Temperaturverteilung in dem Baufeld 8. Anhand der so erfassten Temperaturverteilung werden Verzugsfeldisolinien, beispielsweise anhand von Temperaturgradienten, berechnet. Die für eine Aufbaumaterialschicht bzw. für einen Objektquerschnitt berechneten Verzugsfeldisolinien beruhen somit auf einer Temperaturverteilung mindestens einer darunterliegenden (zuvor selektiv verfestigten) Aufbaumaterialschicht bzw. mindestens einem darunterliegenden Objektquerschnitt.

Bei den oben beschriebenen ersten und zweiten Ausführungsbeispielen zur Ermittlung von Verzugsfeldisolinien werden im Wesentlichen zuerst die mechanischen Spannungszustände (z.B. in Form eines Spannungstensors) bzw. ein Verzugsfeld (z.B. ein Vektorfeld) berechnet und dieses dann, gegebenenfalls mit Hilfe geeigneter Vereinfachungen wie z.B. der Annahme einer Vergleichsspannung schichtweise in ein skalares, zweidimensionales Feld überführt, aus dem dann die Verzugsfeldisolininen berechnet werden. Alternativ dazu können unter Zugrundelegung der mechanischen Spannungszustände bzw. des Verzugsfelds für das gesamte Objekt auch zuerst Verzugsfeldisoflächen berechnet werden. Aus den Schnittgeraden der Verzugsfeldisoflächen mit den jeweiligen Objektquerschnitten werden dann die Verzugsfeldisolinien in dem jeweiligen Querschnitt ermittelt. Diese Berechnung der Verzugsfeldisolinien aus Verzugsfeldisoflächen muss nicht bereits vorab erfolgen, sie kann auch erst bei dem Erzeugen des Datenmodells erfolgen, d.h. in diesem Fall nimmt die Isolinien-Entgegennahmeeinrichtung 101 nicht die Verzugsfeldisolinien, sondern die Verzugsfeldisoflächen entgegen.

Vorzugsweise werden die Verzugsfeldisowerte, für die Verzugsfeldisolinien bzw. Verzugsfeldisoflächen berechnet werden, so gewählt, dass ein Abstand zwischen benachbarten Verzugsfeldisolinien bzw. Verzugsfeldisoflächen kleiner ist als eine Breite einer Verfestigungsbahn.

Insbesondere ist es auch möglich die Vorgehensweisen des ersten bis dritten Ausführungsbeispiels miteinander zu kombinieren, d. h. z. B. aus Simulationen ermittelte Verzugsfeldisolinien nach Probekörpermessungen zu modifizieren oder per Simulation oder Probekörpermessung erhaltene Verzugsfeldisolinien anhand von Prozessmonitordaten zu modifizieren.

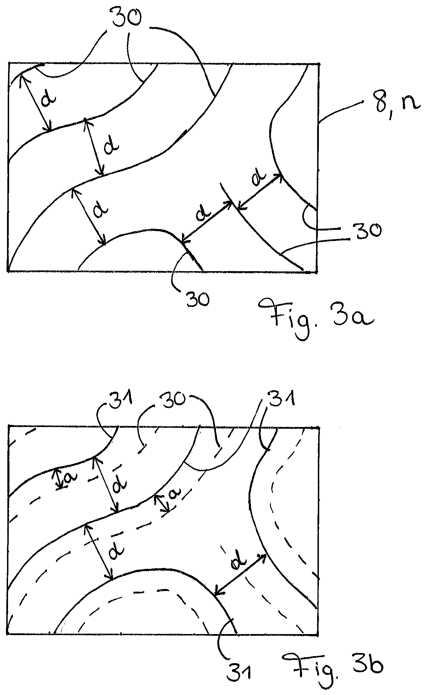

Das Ermitteln der Verfestigungsbahnen im Rahmen des Erzeugens eines Datenmodells (Schritt S2 in Fig. 2) eines ersten Querschnitts (Aufbaumaterialschicht n) unter Zugrundelegung der für diesen Querschnitt ermittelten Verzugsfeldisolinien wird im Folgenden mit Bezug auf Fig. 3a beschrieben. Fig. 3a zeigt eine Draufsicht auf einen Ausschnitt des Baufelds 8, wobei in dem Baufeld 8 eine n-te Aufbaumaterialschicht aufgebracht ist. Weiter sind in Fig. 3a schematisch Verfestigungsbahnen 30 gezeigt, entlang denen der Auftreffbereich des Laserstrahls über die n-te Aufbaumaterialschicht zu führen ist, um das Aufbaumaterial in dem in Fig. 3a gezeigten Ausschnitt zu verfestigen. Zur Vereinfachung der Darstellung sind die Verfestigungsbahnen 30, 31 in Fig. 3a und 3b dabei als Verfestigungslinien, d. h. ohne eine Abmessung senkrecht zu ihrer Haupterstreckungsrichtung, entlang der der Auftreffbereich des Laserstrahls zur Verfestigung des Aufbaumaterials geführt wird bzw. zu führen ist, gezeigt. Die Breite (s. u.) der Verfestigungsbahnen 30 ,31 ist in den Fig. 3a, 3b also nicht gezeigt. Die in den Fig. 3a, 3b die Verfestigungsbahnen darstellenden Linien können beispielsweise Linien sein, auf denen ein definierter Punkt des Auftreffbereichs des Laserstrahls, beispielsweise der Mittelpunkt des Auftreffbereichs, zum Verfestigen des Aufbaumaterials geführt wird bzw. zu führen ist.

Zum Ermitteln der Verfestigungsbahnen 30 werden die für diesen Querschnitt berechneten Verzugsfeldisolinien iterativ abschnittsweise so lange gelöscht, bis nur noch Abschnitte von Verzugsfeldisolinien übrig sind, bei denen zueinander benachbarte Verzugsfeldisolinien bzw. Verzugsfeldisolinienabschnitte einen Abstand d zueinander haben. Der Abstand d wird dabei so gewählt, dass er der Breite der Verfestigungsbahn(en) 30 an der jeweiligen Stelle im Baufeld 8 entspricht. Als Breite bzw. Spurbreite (in den Figuren nicht gezeigt) einer Verfestigungsbahn ist eine Abmessung der Verfestigungsbahn 30 senkrecht zu der Richtung, in der der Auftreffbereich des Laserstrahls 22 entlang der Verfestigungsbahn geführt wird bzw. zu führen ist, zu verstehen. Beispielsweise kann die Breite der Größe des durch den Laserstrahl in der Bauebene erzeugten Schmelzbads entsprechen. Da die Breite einer Verfestigungsbahn über das Baufeld 8 hinweg variieren kann, ist hier die lokale Breite der Verfestigungsbahn in der Arbeitsebene 7 gemeint. Der Abstand d zwischen benachbarten Verzugsfeldisolinien bzw. Verzugsfeldisolinienabschnitten kann somit über das Baufeld 8 hinweg variieren. Die so ermittelten Verzugsfeldisolinien bzw. -abschnitte werden dann als Verfestigungsbahnen 30 als Datenmodell für diesen Querschnitt zum Spezifizieren des Abtastens der Aufbaumaterialschicht n bereitgestellt.

Das Ermitteln der Verfestigungsbahnen im Rahmen des Erzeugens eines Datenmodells (Schritt S2 in Fig. 2) eines zweiten Querschnitts (Aufbaumaterialschicht n+1) unter Zugrundelegung der für diesen Querschnitt ermittelten Verzugsfeldisolinien wird im Folgenden mit Bezug auf Fig. 3b beschrieben. Fig. 3b zeigt denselben Ausschnitt des Baufelds 8 in einer Draufsicht wie Fig. 3a mit einer Aufbaumaterialschicht n+1 und schematisch dargestellten Verfestigungsbahnen 31. Die Verfestigungsbahnen 30 der unmittelbar unter der (n+1)-ten Schicht liegenden n-ten Schicht sind in Fig. 3b schematisch als gestrichelte Linien dargestellt.

Prinzipiell werden die Verfestigungsbahnen 31 des zweiten Querschnitts, d.h. in der (n+1)-ten Schicht, wie oben beschrieben unter Zugrundelegung der Verzugsfeldisolinien berechnet. Dabei werden die Verfestigungsbahnen 31 der Schicht n jedoch so ermittelt, dass sie nicht identisch zu den Verfestigungsbahnen 30 in der darunterliegenden Schicht n sind. Hierzu werden die Verfestigungsbahnen 31 so ermittelt, dass sie in der Ebene des Baufelds 8 (der Bauebene bzw. Arbeitsebene 7) gegenüber den in der darunter liegenden Schicht n liegenden Verfestigungsbahnen 30 eine unterschiedliche Lage und/oder Orientierung aufweisen.

Beispielsweise können die Verzugsfeldisolinien, auf deren Basis die Verfestigungsbahnen 31 der Schicht n+1 ermittelt werden, anderen Verzugsfeldisoflächen angehören als die Verzugsfeldisolinien, auf deren Basis die Verfestigungsbahnen 30 der Schicht n ermittelt werden. Dadurch weisen die Verfestigungsbahnen 31 der Schicht n+1 zumindest abschnittsweise zumindest einen Versatz a gegenüber den Verfestigungsbahnen 30 der Schicht n auf, d.h. ein Abschnitt einer Verfestigungsbahn 31 weist eine unterschiedliche Position, jedoch im Wesentlichen denselben zweidimensionalen Verlauf in dem Baufeld 8 auf wie ein entsprechender Abschnitt einer Verfestigungsbahn 30 in der Schicht n.

Die in Fig. 3a, 3b gezeigten Verfestigungsbahnen 30, 31 können lediglich Abschnitte der ihnen zugrundeliegenden Verzugsfeldisolinien sein. Vorzugsweise erstrecken sich die Verfestigungsbahnen 30, 31 jedoch jeweils über die gesamte Länge der ihnen zugrundeliegenden Verzugsfeldisolinien.

Das oben beschriebene Vorgehen zur Ermittlung von Verfestigungsbahnen unter Zugrundelegung von Verzugsfeldisolinien muss nicht für das gesamte herzustellende dreidimensionale Objekt durchgeführt werden. Vielmehr ist es auch möglich, das beschriebene Verfahren auch lediglich abschnittsweise, d.h. für zumindest einen Bereich des dreidimensionalen Objekts, durchzuführen. Die anderen Objektbereiche können dann mittels eines beliebigen anderen Belichtungsmusters verfestigt werden. Beispielsweise kann eine Ermittlung der Verfestigungsbahnen unter Zugrundelegung von Verzugsfeldisolinien lediglich für Bereiche des dreidimensionalen Objekts durchgeführt werden, in denen ein vorab festgelegter Verzugswert (Eigenspannungswert bzw. Deformationswert) überschritten wird. Bei einer Unterschreitung des vorab festgelegten Verzugswerts kann in den jeweiligen Bereichen ein anderes Belichtungsmuster verwendet werden. Auch können Bereiche mit im Wesentlichen konstanten Verzugswerten (sog. Plateaus) unter Verwendung eines herkömmlichen Belichtungsmusters verfestigt werden, d.h. von einem Abtasten entlang von Verzugsfeldisolinien bzw. Verzugsfeldisolinienabschnitten ausgenommen werden.

Die Ermittlung von Verfestigungsbahnen anhand von Verzugsfeldisolinien ist oben beispielhaft anhand einer ersten Schicht n und einer unmittelbar auf der ersten Schicht n aufgebrachten zweiten Schicht n+1 beschrieben, wobei die Verfestigungsbahnen der Schicht n+1 so gewählt werden, dass sie nicht mit den Verfestigungsbahnen der Schicht n identisch sind. Alternativ oder zusätzlich können die Verfestigungsbahnen in der Schicht n+1 (d.h. in einem Querschnitt n+1) auch unter Berücksichtigung der Verfestigungsbahnen einer anderen, jedoch nicht unmittelbar, darunter liegenden Schicht des Aufbaumaterials (d.h. eines Querschnitts) gewählt werden, also einer Schicht n-x (bzw. einem Querschnitt n-x) mit x ≥ 1.

Alternativ zu einer Berechnung der Verzugsfeldisolinien unter Zugrundelegung eines Deformationsfelds bzw. eines Eigenspannungsfelds kann auch eine Steifigkeit des dreidimensionalen Objekts zur Berechnung der Verzugsfeldisolinien verwendet werden. Analog zu der Deformation bzw. den Eigenspannungen des Objekts bezieht sich die Steifigkeit dabei auf eine Simulation bzw. eine Vermessung eines Probekörpers unter der Bedingung, dass das dem simulierten Objekt bzw. dem Probekörper zugrundeliegende Belichtungsmuster kein Abtasten des Aufbaumaterials entlang von Verzugsfeldisolinien bzw. Abschnitten derselben umfasst.

Die oben in Bezug auf Fig. 1 beschriebene Belichtungsvorrichtung 20 umfasst einen Laser 20 zum Erzeugen eines Laserstrahls 22, wobei zum selektiven Verfestigen einer Aufbaumaterialschicht der Auftreffpunkt des Laserstrahls entsprechend über die Aufbaumaterialschicht verfahren wird. Die Belichtungsvorrichtung der Lasersinter- oder Laserschmelzvorrichtung kann auch mehrere Gas- oder Festkörperlaser oder jede andere Art von Laser wie z.B. Laserdioden, insbesondere VCSEL (Vertical Cavity Surface Emitting Laser) oder VECSEL (Vertical External Cavity Surface Emitting Laser), oder eine Zeile dieser Laser umfassen. Insbesondere in dem Fall, dass mehrere Laser gleichzeitig auf das Aufbaumaterial in der Arbeitsebene gerichtet werden, wird daher auch der Begriff "Energiestrahlbündel" anstelle von "Laserstrahl" verwendet bzw. der Begriff "Auftreffbereich" anstelle von "Auftreffpunkt".

Ferner ist die vorliegende Erfindung nicht auf das Lasersintern oder Laserschmelzen beschränkt, sie kann vielmehr auf beliebige Verfahren zum additiven Herstellen eines dreidimensionalen Objektes durch schichtweises Aufbringen und selektives Verfestigen eines Aufbaumaterials angewendet werden. Allgemein kann als Energieeintragseinrichtung jede Einrichtung verwendet werden, mit der Energie als Wellen- oder Teilchenstrahlung in Form eines Energiestrahls bzw. Energiestrahlbündels selektiv auf eine Schicht des Aufbaumaterials aufgebracht werden kann. Anstelle eines Lasers können beispielsweise eine oder mehrere andere Lichtquelle(n), ein oder mehrere Elektronenstrahl(en) oder jede andere Energie- bzw. Strahlenquelle verwendet werden, die geeignet ist, das Aufbaumaterial zu verfestigen.

Als Aufbaumaterial können verschiedene Arten von Pulver verwendet werden, insbesondere Metallpulver, Kunststoffpulver, Keramikpulver, Sand, gefüllte oder gemischte Pulver. Anstelle von Pulver können auch andere geeignete Materialien als Aufbaumaterial verwendet werden.

## Patentansprüche

1. Computergestütztes Verfahren zur Bereitstellung von Steuerdaten für eine additive Herstellvorrichtung (1) zur Herstellung eines dreidimensionalen Objekts (2) mittels derselben, wobei das Objekt (2) hergestellt wird durch Aufbringen eines Aufbaumaterials (15), Schicht auf Schicht und Verfestigen des Aufbaumaterials (15) mittels Zufuhr von Strahlungsenergie zu Stellen in einer Schicht, die dem Querschnitt des Objekts (2) in dieser Schicht zugeordnet sind, indem zumindest eine Energieeintragseinrichtung (20) zum Eintragen von Energie in das Aufbaumaterial (15) diese Stellen mit mindestens einem Energiestrahlbündel (22) gemäß einem Satz von Energieeintragsparametern entlang einer Anzahl von Verfestigungsbahnen (30, 31) in einer Bauebene abtastet,
wobei das Verfahren zur Bereitstellung von Steuerdaten aufweist:
einen ersten Schritt (S1) des Zugriffs auf computerbasierte Modelldaten von zwei bei der Herstellung zeitlich aufeinanderfolgend, bevorzugt zeitlich unmittelbar aufeinanderfolgend, zu verfestigenden Querschnitten eines Objektabschnitts,
einen zweiten Schritt (S2) des Erzeugens eines Datenmodells jedes der beiden Querschnitte, wobei in dem Datenmodell für jeden der beiden Querschnitte ein Abtasten der Aufbaumaterialschicht mit zumindest einem Energiestrahlbündel (22) entlang zumindest einer Verfestigungsbahn (30, 31) spezifiziert ist,
wobei spezifiziert wird, dass beim Abtasten der Stellen einer Aufbaumaterialschicht, die dem jeweiligen zu verfestigenden Querschnitt zugeordnet sind, der Auftreffbereich zumindest eines Energiestrahlbündels (22) auf dem Aufbaumaterial entlang zumindest eines Abschnitts einer Verzugsfeldisolinie bewegt wird, wobei mittels Simulation das Eigenspannungsfeld und/oder Deformationsfeld oder eine Steifigkeit des dreidimensionalen Objekts für die beiden Querschnitte ermittelt wird und nachfolgend die Verzugsfeldisolinien ermittelt werden, und/oder wobei anhand einer Vermessung eines im Vorhinein hergestellten Probekörpers das Eigenspannungsfeld und/oder Deformationsfeld oder eine Steifigkeit des dreidimensionalen Objekts für den Objektabschnitt ermittelt wird und nachfolgend die Verzugsfeldisolinien für die beiden Querschnitte ermittelt werden, und/oder wobei Verzugsfeldisolinien der beiden Querschnitte ermittelt werden, indem das Eigenspannungsfeld und/oder Deformationsfeld in den beiden Querschnitten unter Zugrundelegung von Werten von während der Herstellung des dreidimensionalen Objekts und vor der Verfestigung des Objektabschnitts gemessenen Prozessmonitorparametern ermittelt wird,
wobei ein Abschnitt einer Verzugsfeldisolinie, entlang dessen der Auftreffbereich beim Abtasten des zeitlich später zu verfestigenden Querschnitts bewegt wird, so gewählt wird, dass er gegenüber einem Abschnitt einer Verzugsfeldisolinie, entlang dessen der Auftreffbereich beim Abtasten des zeitlich zuerst zu verfestigenden Querschnitts bewegt wird, eine unterschiedliche Lage und/oder Orientierung in der Bauebene aufweist, und
einen dritten Schritt (S3), in dem Steuerdaten entsprechend dem im zweiten Schritt (S2) erzeugten Datenmodell für die Generierung eines Steuerdatensatzes für die additive Herstellvorrichtung (1) bereitgestellt werden.

2. Verfahren zur computergestützten Ansteuerung einer Anzahl von Energieeintragseinrichtungen (20) einer additiven Herstellvorrichtung (1) zur Herstellung eines dreidimensionalen Objekts (2) mittels derselben,
wobei das Objekt (2) hergestellt wird durch Aufbringen eines Aufbaumaterials (15), Schicht auf Schicht und Verfestigen des Aufbaumaterials (15) mittels Zufuhr von Strahlungsenergie zu Stellen in einer Schicht, die dem Querschnitt des Objekts (2) in dieser Schicht zugeordnet sind, indem zumindest eine Energieeintragseinrichtung (20) zum Eintragen von Energie in das Aufbaumaterial (15) diese Stellen mit mindestens einem Energiestrahlbündel (22) gemäß einem Satz von Energieeintragsparametern entlang einer Anzahl von Verfestigungsbahnen (30, 31) in einer Bauebene abtastet,
wobei die Anzahl von Energieeintragseinrichtungen (20) unter Verwendung von Steuerdaten, die in einem Verfahren gemäß Anspruch 1 bereitgestellt wurden, angesteuert wird.

3. Verfahren nach Anspruch 1 oder 2, bei dem für die beiden Querschnitte spezifiziert wird, dass der Auftreffbereich entlang einer Mehrzahl von Abschnitten von Verzugsfeldisolinien bewegt wird, die so gewählt werden, dass ihr gegenseitiger Abstand (d) im Wesentlichen der Breite einer Verfestigungsbahn auf dem Aufbaumaterial quer zur Bewegungsrichtung des Auftreffbereichs entspricht.

4. Verfahren nach einem der Ansprüche 1 bis 3, bei dem ein Abschnitt einer Verzugsfeldisolinie, entlang dessen der Auftreffbereich beim Abtasten des zeitlich später zu verfestigenden Querschnitts bewegt wird, innerhalb der Bauebene einen Versatz (a) gegenüber einem Abschnitt einer Verzugsfeldisolinie aufweist, entlang dessen der Auftreffbereich beim Abtasten des zeitlich zuerst zu verfestigenden Querschnitts bewegt wird.

5. Verfahren nach einem der Ansprüche 1 bis 4, bei dem die Abschnitte von Verzugsfeldisolinien, entlang derer der Auftreffbereich in den beiden Querschnitten bewegt wird, sich jeweils über die gesamte Länge einer Verzugsfeldisolinie erstrecken.

6. Verfahren nach einem der Ansprüche 1 bis 5, bei dem die Abschnitte von Verzugsfeldisolinien, entlang derer der Auftreffbereich in den beiden Querschnitten bewegt wird, so gewählt werden, dass die Abschnitte in unterschiedlichen Querschnitten unterschiedlichen Verzugsfeldisoflächen angehören.

7. Vorrichtung zur computergestützten Ansteuerung einer Anzahl von Energieeintragseinrichtungen (20) einer additiven Herstellvorrichtung (1) zur Herstellung eines dreidimensionalen Objekts (2) mittels derselben,
wobei das Objekt (2) hergestellt wird durch Aufbringen eines Aufbaumaterials (15), Schicht auf Schicht und Verfestigen des Aufbaumaterials (15) mittels Zufuhr von Strahlungsenergie zu Stellen in einer Schicht, die dem Querschnitt des Objekts (2) in dieser Schicht zugeordnet sind, indem zumindest eine Energieeintragseinrichtung (20) zum Eintragen von Energie in das Aufbaumaterial (15) diese Stellen mit mindestens einem Energiestrahlbündel (22) gemäß einem Satz von Energieeintragsparametern entlang einer Anzahl von Verfestigungsbahnen (30, 31) in einer Bauebene abtastet,
wobei die Vorrichtung so ausgelegt ist, dass die Anzahl von Energieeintragseinrichtungen (20) so angesteuert wird, dass für zwei bei der Herstellung zeitlich aufeinanderfolgend, bevorzugt zeitlich unmittelbar aufeinanderfolgend, zu verfestigende Querschnitte eines Objektabschnitts für jeden der beiden Querschnitte ein Abtasten der Aufbaumaterialschicht mit zumindest einem Energiestrahlbündel (22) entlang zumindest einer Verfestigungsbahn (30, 31) spezifiziert wird,
wobei spezifiziert wird, dass beim Abtasten der Stellen einer Aufbaumaterialschicht, die dem jeweiligen zu verfestigenden Querschnitt zugeordnet sind, der Auftreffbereich zumindest eines Energiestrahlbündels (22) auf dem Aufbaumaterial (15) entlang zumindest eines Abschnitts einer Verzugsfeldisolinie bewegt wird, wobei mittels Simulation das Eigenspannungsfeld und/oder Deformationsfeld oder eine Steifigkeit des dreidimensionalen Objekts für die beiden Querschnitte ermittelt wird und nachfolgend die Verzugsfeldisolinien ermittelt werden, und/oder wobei anhand einer Vermessung eines im Vorhinein hergestellten Probekörpers das Eigenspannungsfeld und/oder Deformationsfeld oder eine Steifigkeit des dreidimensionalen Objekts für den Objektabschnitt ermittelt wird und nachfolgend die Verzugsfeldisolinien für die beiden Querschnitte ermittelt werden, und/oder wobei Verzugsfeldisolinien der beiden Querschnitte ermittelt werden, indem das Eigenspannungsfeld und/oder Deformationsfeld in den beiden Querschnitten unter Zugrundelegung von Werten von während der Herstellung des dreidimensionalen Objekts und vor der Verfestigung des Objektabschnitts gemessenen Prozessmonitorparametern ermittelt wird,
wobei ein Abschnitt einer Verzugsfeldisolinie, entlang dessen der Auftreffbereich beim Abtasten des zeitlich später zu verfestigenden Querschnitts bewegt wird, so gewählt wird, dass er gegenüber einem Abschnitt einer Verzugsfeldisolinie, entlang dessen der Auftreffbereich beim Abtasten des zeitlich zuerst zu verfestigenden Querschnitts bewegt wird, eine unterschiedliche Lage und/oder Orientierung in der Bauebene aufweist.

8. Vorrichtung nach Anspruch 7, weiterhin mit einer Isolinien-Entgegennahmeeinheit (101) zur Entgegennahme von Daten, welche die Lage von Verzugsfeldisolinien in dem zumindest einen Objekt (2) beschreiben.

9. Vorrichtung nach Anspruch 7 oder 8, weiterhin mit einer Isolinien-Speichereinheit (102) zur Speicherung von Daten, welche die Lage von Verzugsfeldisolinien in dem zumindest einen Objekt (2) beschreiben.

10. Additive Herstellvorrichtung (1) zur Herstellung eines dreidimensionalen Objekts (2), wobei das Objekt (2) hergestellt wird durch Aufbringen eines Aufbaumaterials (15), Schicht auf Schicht und Verfestigen des Aufbaumaterials (15) mittels Zufuhr von Strahlungsenergie zu Stellen in einer Schicht, die dem Querschnitt des Objekts (2) in dieser Schicht zugeordnet sind, indem zumindest eine Energieeintragseinrichtung (20) zum Eintragen von Energie in das Aufbaumaterial (15) diese Stellen mit mindestens einem Energiestrahlbündel (22) gemäß einem Satz von Energieeintragsparametern entlang einer Anzahl von Verfestigungsbahnen (30, 31) in einer Bauebene abtastet,
wobei die additive Herstellvorrichtung (1) eine Vorrichtung nach einem der Ansprüche 7 bis 9 aufweist.

11. Additives Herstellverfahren zur Herstellung eines dreidimensionalen Objekts (2), wobei das Objekt (2) hergestellt wird durch Aufbringen eines Aufbaumaterials (15), Schicht auf Schicht und Verfestigen des Aufbaumaterials (15) mittels Zufuhr von Strahlungsenergie zu Stellen in einer Schicht, die dem Querschnitt des Objekts (2) in dieser Schicht zugeordnet sind, indem zumindest eine Energieeintragseinrichtung (20) zum Eintragen von Energie in das Aufbaumaterial (15) diese Stellen mit mindestens einem Energiestrahlbündel (22) gemäß einem Satz von Energieeintragsparametern entlang einer Anzahl von Verfestigungsbahnen (30, 31) in einer Bauebene abtastet,
wobei ein Verfahren nach einem der Ansprüche 1 bis 6 Bestandteil des additiven Herstellverfahrens ist.

12. Additives Herstellverfahren nach Anspruch 11, wobei mittels Simulation das Eigenspannungsfeld und/oder Deformationsfeld für die beiden Querschnitte ermittelt wird und nachfolgend die Verzugsfeldisolinien durch einen Marching Squares-Algorithmus ermittelt werden.

13. Verfahren nach Anspruch 11 oder 12, wobei anhand einer Vermessung eines im Vorhinein hergestellten Probekörpers das Eigenspannungsfeld und/oder Deformationsfeld für den Objektabschnitt ermittelt wird und nachfolgend die Verzugsfeldisolinien für die beiden Querschnitte durch einen Marching Squares-Algorithmus ermittelt werden.

14. Computerprogramm mit Programmcodemitteln, um alle Schritte eines Verfahrens gemäß einem der Ansprüche 1 bis 6 auszuführen, wenn das Computerprogramm auf einem Datenprozessor, insbesondere einem mit einer additiven Herstellvorrichtung (1) zusammenwirkenden Datenprozessor, ausgeführt wird.

## Claims

1. Computer-aided method for providing control data for an additive manufacturing device (1) for manufacturing a three-dimensional object (2) by means thereof, wherein the object (2) is manufactured by applying a building material (15) layer upon layer and solidifying the building material (15) by supplying radiation energy to locations in a layer which are assigned to the cross-section of the object (2) (2) in this layer, by means of at least one energy input device (20) for inputting energy into the building material (15), which scans these locations with at least one energy beam (22) in accordance with a set of energy input parameters along a number of solidification paths (30, 31) in a building plane,
wherein the method for providing control data comprises:
a first step (S1) of accessing computer-based model data of two cross-sections of an object section to be solidified in temporal succession, preferably immediately in temporal succession, during manufacture,
a second step (S2) of generating a data model of each of the two cross-sections, wherein in the data model for each of the two cross-sections, a scanning of the building material layer with at least one energy beam (22) along at least one solidification path (30, 31) is specified,
wherein it is specified that, when scanning the locations of a building material layer which are assigned to the respective cross-section to be solidified, the impact area of at least one energy beam (22) on the building material is moved along at least a section of a distortion field isoline, wherein the residual stress field and/or deformation field or a stiffness of the three-dimensional object is determined for the two cross-sections by means of simulation and the distortion field isolines are subsequently determined, and/or wherein the residual stress field and/or deformation field or a stiffness of the three-dimensional object for the object section is determined by measuring a test specimen produced in advance and the distortion field isolines for the two cross-sections are then determined, and/or wherein distortion field isolines of the two cross-sections are determined by determining the residual stress field and/or deformation field in the two cross-sections on the basis of values of process monitoring parameters measured during the manufacture of the three-dimensional object and before the solidification of the object section,
wherein a section of a distortion field isoline along which the impact area is moved during scanning of the cross-section to be solidified later in time is selected such that it has a different position and/or orientation in the building plane compared to a section of a distortion field isoline along which the impact area is moved during scanning of the cross-section to be solidified first, and
a third step (S3) in which control data corresponding to the data model generated in the second step (S2) are provided for generating a control data set for the additive manufacturing device (1).

2. Method for computer-aided control of a number of energy input devices (20) of an additive manufacturing device (1) for manufacturing a three-dimensional object (2) by means thereof,
wherein the object (2) is manufactured by applying a building material (15) layer upon layer and solidifying the building material (15) by supplying radiation energy to locations in a layer that are assigned to the cross-section of the object (2) in this layer, by means of at least one energy input device (20) for inputting energy into the building material (15), which scans these locations with at least one energy beam (22) according to a set of energy input parameters along a number of solidification paths (30, 31) in a building plane,
wherein the number of energy input devices (20) is controlled using control data provided in a method according to claim 1.

3. Method according to claim 1 or 2, wherein it is specified for the two cross-sections that the impact area is moved along a plurality of sections of distortion field isolines which are selected such that their mutual distance (d) substantially corresponds to the width of a solidification path on the building material transverse to the direction of movement of the impact area.

4. Method according to one of claims 1 to 3, wherein a section of a distortion field isoline along which the impact area is moved when scanning the cross-section to be solidified later in time, has an offset (a) within the building plane relative to a section of a distortion field isoline along which the impact area is moved when scanning the cross-section to be solidified first.

5. Method according to one of claims 1 to 4, wherein the sections of distortion field isolines along which the impact area is moved in the two cross-sections extend over the entire length of a distortion field isoline.

6. Method according to one of claims 1 to 5, wherein the sections of distortion field isolines along which the impact area is moved in the two cross-sections are selected such that the sections in different cross-sections belong to different distortion field isosurfaces.

7. Device for computer-aided control of a number of energy input devices (20) of an additive manufacturing device (1) for manufacturing a three-dimensional object (2) by means thereof,
wherein the object (2) is manufactured by applying a building material (15) layer upon layer and solidifying the building material (15) by supplying radiation energy to locations in a layer which are assigned to the cross-section of the object (2) in this layer, by means of at least one energy input device (20) for introducing energy into the building material (15), which scans these locations with at least one energy beam (22) in accordance with a set of energy input parameters along a number of solidification paths (30, 31) in a building plane,
wherein the device is configured such that the number of energy input devices (20) is controlled in such a way that, for two cross-sections of an object section to be solidified in temporal succession, preferably immediately in temporal succession, during manufacture, it is specified that the building material layer is scanned with at least one energy beam bundle (22) along at least one solidification path (30, 31),
wherein it is specified that, when scanning the locations of a building material layer which are assigned to the respective cross-section to be solidified, the impact area of at least one energy beam (22) on the building material (15) is moved along at least one section of a distortion field isoline, wherein the residual stress field and/or deformation field or a stiffness of the three-dimensional object is determined for the two cross-sections by means of simulation and the distortion field isolines are subsequently determined, and/or wherein the residual stress field and/or deformation field or a stiffness of the three-dimensional object is determined for the object section on the basis of a measurement of a test specimen produced in advance and the distortion field isolines for the two cross-sections are subsequently determined, and/or wherein distortion field isolines of the two cross-sections are determined by determining the residual stress field and/or deformation field in the two cross-sections on the basis of values of process monitoring parameters measured during the manufacture of the three-dimensional object and before the solidification of the object section,
wherein a section of a distortion field isoline along which the impact area is moved during scanning of the cross-section to be solidified later in time is selected such that it has a different position and/or orientation in the building plane relative to a section of a distortion field isoline along which the impact area is moved during scanning of the cross-section to be solidified first.

8. Device according to claim 7, further having an isoline receiving unit (101) for receiving data describing the position of distortion field isolines in the at least one object (2).

9. Device according to claim 7 or 8, further having an isoline storage unit (102) for storing data describing the position of distortion field isolines in the at least one object (2).

10. Additive manufacturing device (1) for manufacturing a three-dimensional object (2), wherein the object (2) is manufactured by applying a building material (15) layer upon layer and solidifying the building material (15) by supplying radiation energy to locations in a layer which are assigned to the cross-section of the object (2) in this layer by means of at least one energy input device (20) for introducing energy into the building material (15), which scans these locations with at least one energy beam (22) in accordance with a set of energy input parameters along a number of solidification paths (30, 31) in a building plane,
wherein the additive manufacturing device (1) comprises a device according to one of claims 7 to 9.

11. Additive manufacturing method for manufacturing a three-dimensional object (2), wherein the object (2) is manufactured by applying a building material (15) layer upon layer and solidifying the building material (15) by supplying radiation energy to locations in a layer which are assigned to the cross-section of the object (2) in this layer by means of at least one energy input device (20) for introducing energy into the building material (15), which scans these locations with at least one energy beam (22) in accordance with a set of energy input parameters along a number of solidification paths (30, 31) in a building plane,
wherein a method according to one of claims 1 to 6 is part of the additive manufacturing method.

12. Additive manufacturing method according to claim 11, wherein the residual stress field and/or deformation field for the two cross-sections is determined by means of simulation and the distortion field isolines are subsequently determined by a marching squares algorithm.

13. Method according to claim 11 or 12, wherein the residual stress field and/or deformation field for the object section is determined on the basis of a measurement of a test specimen produced in advance and the distortion field isolines for the two cross-sections are subsequently determined by a marching squares algorithm.

14. Computer program having program code means for executing all steps of a method according to one of claims 1 to 6 when the computer program is executed on a data processor, in particular a data processor cooperating with an additive manufacturing device (1).

## Revendications

1. Procédé assisté par ordinateur pour la mise à disposition de données de commande pour un dispositif de fabrication additive (1) pour la fabrication d'un objet tridimensionnel (2) au moyen de celui-ci, dans lequel l'objet (2) est fabriqué par application d'un matériau de construction (15) couche par couche et solidification du matériau de construction (15) au moyen de l'apport d'énergie de rayonnement à des positions dans une couche, qui sont associées à la section transversale de l'objet (2) dans cette couche, en ce qu'au moins un dispositif d'introduction d'énergie (20) pour introduire d'énergie dans le matériau de construction (15) balaye ces positions avec au moins un faisceau d'énergie (22) selon un ensemble de paramètres d'introduction d'énergie le long d'un nombre de voies de solidification (30, 31) dans un plan de construction,
dans lequel le procédé pour la mise à disposition de données de commande présente :
une première étape (S1) d'accès à des données de modèle basées sur ordinateur de deux sections transversales d'une section d'objet à solidifier produites pendant la fabrication de manière successives dans le temps, de préférence immédiatement successives dans le temps,
une deuxième étape (S2) de génération d'un modèle de données de chacune des deux sections transversales, où un balayage de la couche de matériau de construction avec au moins un faisceau d'énergie (22) le long d'au moins une voie de solidification (30, 31) est spécifié dans le modèle de données pour chacune des deux sections transversales,
dans lequel il est spécifié que pendant le balayage des positions d'une couche de matériau de construction, qui sont associées à la section transversale respective à solidifier, la zone d'incidence d'au moins un faisceau d'énergie (22) sur le matériau de construction est déplacée le long d'au moins une section d'une isoligne de champ de déformation, dans lequel le champ de contrainte résiduelle et/ou le champ de déformation ou une rigidité de l'objet tridimensionnel pour les deux sections transversales est déterminé(e) par simulation et ensuite les isolignes de champ de déformation sont déterminées, et/ou dans lequel le champ de contrainte résiduelle et/ou le champ de déformation ou une rigidité de l'objet tridimensionnel pour la section d'objet est déterminé(e) à l'aide d'une mesure d'un corps d'essai fabriqué à l'avance et ensuite les isolignes de champ déformation pour les deux sections transversales sont déterminées, et/ou dans lequel les isolignes de champ de déformation des deux sections transversales sont déterminées en ce que le champ de contrainte résiduelle et/ou le champ de déformation dans les deux sections transversales est déterminé(e) en prenant pour base des valeurs de paramètres de moniteur de processus mesurés pendant la fabrication de l'objet tridimensionnel et avant la solidification de la section d'objet,
dans lequel une section d'une isoligne de champ de déformation, le long de laquelle la zone d'incidence est déplacée pendant le balayage de la section transversale à solidifier ultérieurement dans le temps, est choisie de telle sorte qu'elle présente une position et/ou orientation différente dans le plan de construction par rapport à une section d'une isoligne de champ de déformation, le long de laquelle la zone d'incidence est déplacée pendant le balayage de la section transversale à solidifier en premier dans le temps, et
une troisième étape (S3), dans laquelle des données de commande correspondant au modèle de données généré dans la deuxième étape (S2) sont mises à disposition pour la génération d'un ensemble de données de commande pour le dispositif de fabrication additive (1).

2. Procédé pour la commande assistée par ordinateur d'un nombre de dispositifs d'introduction d'énergie (20) d'un dispositif de fabrication additive (1) pour la fabrication d'un objet tridimensionnel (2) au moyen de celui-ci,
dans lequel l'objet (2) est fabriqué par application d'un matériau de construction (15) couche par couche et solidification du matériau de construction (15) au moyen de l'apport d'énergie de rayonnement à des positions dans une couche, qui sont associées à la section transversale de l'objet (2) dans cette couche, en ce qu'au moins un dispositif d'introduction d'énergie (20) pour introduire d'énergie dans le matériau de construction (15) balaye ces positions avec au moins un faisceau d'énergie (22) selon un ensemble de paramètres d'introduction d'énergie le long d'un nombre de voies de solidification (30, 31) dans un plan de construction,
dans lequel le nombre de dispositifs d'introduction d'énergie (20) est commandé en utilisant des données de commande qui ont été mises à disposition dans un procédé selon la revendication 1.

3. Procédé selon la revendication 1 ou 2, dans lequel il est spécifié pour les deux sections transversales que la zone d'incidence est déplacée le long d'une pluralité de sections d'isolignes de champ de déformation, qui sont choisies de telle sorte que leur distance mutuelle (d) correspond sensiblement à la largeur d'une voie de solidification sur le matériau de construction transversalement à la direction de déplacement de la zone d'incidence.

4. Procédé selon l'une quelconque des revendications 1 à 3, dans lequel une section d'une isoligne de champ de déformation, le long de laquelle la zone d'incidence est déplacée pendant le balayage de la section transversale à solidifier ultérieurement dans le temps, présente à l'intérieur du plan de construction un décalage (a) par rapport à une section d'une isoligne de champ de déformation, le long de laquelle la zone d'incidence est déplacée pendant le balayage de la section transversale à solidifier en premier dans le temps.

5. Procédé selon l'une quelconque des revendications 1 à 4, dans lequel les sections d'isolignes de champ de déformation, le long desquelles la zone d'incidence est déplacée dans les deux sections transversales, s'étendent respectivement sur toute la longueur d'une isoligne de champ de déformation.

6. Procédé selon l'une quelconque des revendications 1 à 5, dans lequel les sections d'isolignes de champ de déformation, le long desquelles la zone d'incidence est déplacée dans les deux sections transversales, sont choisies de telle sorte que les sections dans des sections transversales différentes appartiennent à des isosurfaces de champ de déformation différentes.

7. Dispositif pour la commande assistée par ordinateur d'un nombre de dispositifs d'introduction d'énergie (20) d'un dispositif de fabrication additive (1) pour la fabrication d'un objet tridimensionnel (2) au moyen de celui-ci,
dans lequel l'objet (2) est fabriqué par application d'un matériau de construction (15) couche par couche et solidification du matériau de construction (15) au moyen de l'apport d'énergie de rayonnement à des positions dans une couche, qui sont associées à la section transversale de l'objet (2) dans cette couche, en ce qu'au moins un dispositif d'introduction d'énergie (20) pour introduire d'énergie dans le matériau de construction (15) balaye ces positions avec au moins un faisceau d'énergie (22) selon un ensemble de paramètres d'introduction d'énergie le long d'un nombre de voies de solidification (30, 31) dans un plan de construction,
dans lequel le dispositif est conçu de telle sorte que le nombre de dispositifs d'introduction d'énergie (20) est commandé de telle sorte qu'un balayage de la couche de matériau de construction avec au moins un faisceau d'énergie (22) le long d'au moins une voie de solidification (30, 31) est spécifié pour chacune des deux sections transversales d'une section d'objet à solidifier produites pendant la fabrication de manière successives dans le temps, de préférence immédiatement successives dans le temps,
dans lequel il est spécifié que pendant le balayage des positions d'une couche de matériau de construction, qui sont associées à la section transversale respective à solidifier, la zone d'incidence d'au moins un faisceau d'énergie (22) sur le matériau de construction (15) est déplacée le long d'au moins une section d'une isoligne de champ de déformation, dans lequel le champ de contrainte résiduelle et/ou le champ de déformation ou une rigidité de l'objet tridimensionnel pour les deux sections transversales est déterminé(e) par simulation et ensuite les isolignes de champ de déformation sont déterminés, et/ou dans lequel le champ de contrainte résiduelle et/ou le champ de déformation ou une rigidité de l'objet tridimensionnel pour la section d'objet est déterminé(e) à l'aide d'une mesure d'un corps d'essai fabriqué à l'avance et ensuite les isolignes de champs de déformation pour les deux sections transversales sont déterminées, et/ou dans lequel les isolignes de champ de déformation des deux sections transversales sont déterminées en ce que le champ de contrainte résiduelle et/ou le champ de déformation dans les deux sections transversales est déterminé(e) en prenant pour base des valeurs de paramètres de moniteur de processus mesurés pendant la fabrication de l'objet tridimensionnel et avant la solidification de la section d'objet,
dans lequel une section d'une isoligne de champ de déformation, le long de laquelle la zone d'incidence est déplacée pendant le balayage de la section transversale à solidifier ultérieurement dans le temps, est choisie de telle sorte qu'elle présente une position et/ou orientation différente dans le plan de construction par rapport à une section d'une isoligne de champ de déformation, le long de laquelle la zone d'incidence est déplacée pendant le balayage de la section transversale à solidifier en premier dans le temps.

8. Dispositif selon la revendication 7, comprenant en outre une unité de réception d'isolignes (101) pour la réception de données qui décrivent la position d'isolignes de champ de déformation dans l'au moins un objet (2).

9. Dispositif selon la revendication 7 ou 8, comprenant en outre une unité de stockage d'isolignes (102) pour le stockage de données qui décrivent la position d'isolignes de champ de déformation dans l'au moins un objet (2).

10. Dispositif de fabrication additive (1) pour la fabrication d'un objet tridimensionnel (2), dans lequel l'objet (2) est fabriqué par application d'un matériau de construction (15) couche par couche et solidification du matériau de construction (15) au moyen de l'apport d'énergie de rayonnement à des positions dans une couche, qui sont associées à la section transversale de l'objet (2) dans cette couche, en ce qu'au moins un dispositif d'introduction d'énergie (20) pour introduire d'énergie dans le matériau de construction (15) balaye ces positions avec au moins un faisceau d'énergie (22) selon un ensemble de paramètres d'introduction d'énergie le long d'un nombre de voies de solidification (30, 31) dans un plan de construction,
dans lequel le dispositif de fabrication additive (1) présente un dispositif selon l'une quelconque des revendications 7 à 9.

11. Procédé de fabrication additive pour la fabrication d'un objet tridimensionnel (2), dans lequel l'objet (2) est fabriqué par application d'un matériau de construction (15) couche par couche et solidification du matériau de construction (15) au moyen de l'apport d'énergie de rayonnement à des positions dans une couche, qui sont associées à la section transversale de l'objet (2) dans cette couche, en ce qu'au moins un dispositif d'introduction d'énergie (20) pour introduire d'énergie dans le matériau de construction (15) balaye ces positions avec au moins un faisceau d'énergie (22) selon un ensemble de paramètres d'introduction d'énergie le long d'un nombre de voies de solidification (30, 31) dans un plan de construction,
dans lequel un procédé selon l'une quelconque des revendications 1 à 6 fait partie du procédé de fabrication additive.

12. Procédé de fabrication additive selon la revendication 11, dans lequel le champ de contrainte résiduelle et/ou le champ de déformation pour les deux sections transversales est déterminé(e) au moyen d'une simulation et ensuite les isolignes de champ de déformation sont déterminées par un algorithme de Marching Squares.

13. Procédé selon la revendication 11 ou 12, dans lequel le champ de contrainte résiduelle et/ou le champ de déformation pour la section d'objet est déterminé à l'aide d'une mesure d'un corps d'essai fabriqué à l'avance et ensuite les isolignes de champ de déformation pour les deux sections transversales sont déterminées par un algorithme de Marching Squares.

14. Programme informatique avec des moyens de code de programme pour exécuter toutes les étapes d'un procédé selon l'une quelconque des revendications 1 à 6, lorsque le programme informatique est exécuté sur un processeur de données, en particulier un processeur de données coopérant avec un dispositif de fabrication additive (1).
